# EUROPEAN PATENT SPECIFICATION

(11) **EP 3 317 817 B1**
(45) Date of publication and mention of the grant of the patent: **06.10.2021**
(21) Application number: 16738639.0
(22) Date of filing: 01.07.2016
(51) Int. Cl.: G06Q 20/40, G06Q 20/20, G06Q 20/32

(54) **IDENTIFYING CONSUMERS IN A TRANSACTION VIA FACIAL RECOGNITION**
IDENTIFIKATION VON VERBRAUCHERN IN EINER TRANSAKTION ÜBER GESICHTSERKENNUNG
IDENTIFICATION DE CONSOMMATEURS DANS UNE TRANSACTION AU MOYEN D'UNE RECONNAISSANCE FACIALE

(30) Priority: 02.07.2015 US 201514791239
(43) Date of publication of application: 09.05.2018
(73) Proprietor: Google LLC, Mountain View, CA 94043 (US)
(72) Inventor: HENDERSON, Philip, Thomas, Mountain View, CA 94043 (US); SIDDIQI, Sajid, Mountain View, CA 94043 (US)
(74) Representative: Kilburn & Strode LLP
(86) International application number: PCT/US2016/040881
(87) International publication number: WO 2017/004602

(56) References cited:
- US-A1- 2006 160 525
- US-A1- 2006 160 525
- US-A1- 2013 159 119
- US-A1- 2013 159 119
- US-A1- 2013 251 216
- US-A1- 2013 251 216
- US-A1- 2015 072 618
- US-A1- 2015 072 618

## Description

### TECHNICAL FIELD

The present disclosure relates to improving user convenience in transactions by identifying user accounts for use in transactions based on facial recognition of users.

### BACKGROUND

When consumers make purchases at a merchant location, many methods of conducting a transaction are available. Consumers may use many different cards or accounts for purchases, such as gift cards, debit cards, credit cards, stored value cards, and other cards or accounts. The user account identifiers and other data represented by the cards may be communicated to the merchant system via magnetic stripes, near field communication technologies involving user computing devices, and other suitable mechanisms.

Current applications for conducting transactions at a merchant location require a consumer to perform actions to identify himself by providing user account identifiers or other data to the merchant system.

US 2013/251216 A1 describes techniques related to personal identification combining proximity sensing with biometrics. US 2006/160525 A1 describes techniques related to an authentication system for a mobile terminal having electronic money function.

US 2015/072618 A1 discusses, according to its abstract, systems and methods are provided for checking many users in to a location using a Bluetooth® low energy (BLE) beacon. The provided systems and methods may allow a BLE beacon to facilitate a check in with a remote server that processes check ins and then disconnect from the device used to check in. The device may be assigned a unique identifier that may be broadcast from the device during the check in so that the BLE beacon can quickly scan for the identifier and connect with the device based on the identifier to provide content and other information to the device.

US 2006/160525 A1 discusses, according to its abstract, that a user of a mobile phone photographs himself/herself, and sends a password to an authentication server. After the authentication server authenticates the user, the mobile phone stores the photographed image of the user in a memory accessible only by authentication software. When the authentication software detects a billing apparatus at the time the user makes a purchase, the image is read from the memory and displayed while an indicator is on. A store clerk can confirm whether the person carrying the mobile phone is the legitimate user by judging whether the face image matches the person and whether the indicator is on at the same time.

US 2013/159119 A1 discusses, according to its abstract, a method that includes obtaining a current location of a mobile device of a customer; sending the current location to a cardless payment system; determining whether to send, to the cardless payment system, an indication of consent to perform a cardless payment transaction with the merchant; displaying on the mobile device whether the merchant is authorized to perform a cardless payment transaction with the customer.

### SUMMARY

The invention is defined by the independent claims.

The present solution and its variants possess the potential to produce an increased security with a reduced interaction by the user. In addition, a technical effect produced by the present solution and its variants in the real world can lie in the fact that no secure telecommunication lines (VPN or the like) are mandatory (albeit not excluded) to provide a more secure user identification. Another aspect of a technical effect produced by the present solution and its variants resides in the improved security avoiding false rejections involving additional data traffic to positively resolve the matter, as well as ancillary communication traffic. Further, the present solution and its variants possess the potential to produce a technical effect by automatically giving visual indications of authenticity of a user at the POS computing device. The present solution and its variants possess utilize special technical features corresponding for the technical implementation of user identification as defined in the claims, the further description and the drawings. The present solution and its variants possess the potential to present information regarding user identity, also in a more efficient and secure manner.

The present solution and its variants possess the potential to improve confidentiality of a user who would otherwise have to produce additional means of proof of his identity. In addition, the data transmission and processing can be improved and errors can be reduced.

In certain other example aspects described herein, systems and computer program products to conduct transactions with facial recognition of a user are provided.

These and other aspects, objects, features, and advantages of the example useful for understanding the claimed invention will become apparent to those having ordinary skill in the art upon consideration of the following detailed description of illustrated examples useful for understanding the invention In the following, the wording "embodiment", occurring without the conjunction "of the invention" is to be understood as a set of features which is not necessarily related to the features of the independent claims.

### BRIEF DESCRIPTION OF THE DRAWINGS

Figure 1 is a block diagram depicting a system for conducting a transaction with facial recognition of a user, in accordance with certain example embodiments.
Figure 2 is a block flow diagram depicting a method for conducting a transaction with facial recognition of a user, in accordance with certain example embodiments.
Figure 3 is a block flow diagram depicting a method for registering, by a merchant system, with a payment processing system and installing hardware at merchant system location, in accordance with certain example embodiments.
Figure 4 is a block flow diagram depicting a method for registering, by a user, for an account with a payment processing system, in accordance with certain example embodiments.
Figure 5 is a block flow diagram depicting a method for establishing a facial template associated with a user account, in accordance with certain example embodiments.
Figure 6 is a block flow diagram depicting a method for generating, by a payment processing system, similar facial templates to associate with a user facial template, in accordance with certain example embodiments.
Figure 7 is a block flow diagram depicting a method for receiving, by a user computing device, a merchant beacon identifier broadcasted by a merchant beacon device, in accordance with certain example embodiments.
Figure 8 is a block flow diagram depicting a method for receiving, by a merchant point of sale device, facial templates, in accordance with certain example embodiments.
Figure 9 is a block flow diagram depicting a method for receiving, by a merchant point of sale device, notification from a payment processing system as users enter or leave a network range of a merchant beacon device, in accordance with certain example embodiments.
Figure 10 is a block flow diagram depicting a method for initiating, by a user, a transaction at a merchant point of sale device, in accordance with certain example embodiments.
Figure 11 is a block flow diagram depicting a method for identifying, by a merchant point of sale operator, a user via facial recognition, in accordance with certain example embodiments.
Figure 12 is a block flow diagram depicting a method for identifying, by a merchant point of sale device operator, a user via identity documents, in accordance with certain example embodiments.
Figure 13 is a block flow diagram depicting a method for processing a transaction, in accordance with certain example embodiments.
Figure 14 is a block diagram depicting a computing machine and module, in accordance with certain example embodiments.

### DETAILED DESCRIPTION OF EXAMPLE EMBODIMENTS

### Overview

The example embodiments described herein provide computer-implemented techniques for conducting a transaction with facial recognition of a user.

In an example embodiment, a merchant registers with a payment processing system. A merchant system installs one or more merchant beacon devices and one or more merchant point of sale devices at a merchant system location. For example, a user establishes an account with the payment processing system and downloads a payment application on a user computing device associated with the user. In an example, the user transmits an image of himself and/or a signature to the payment processing system to establish a facial template and/or signature template associated with the user account. A user enters a merchant system location and signs into the payment application via the user computing device. In another example, the user signs into the payment application at a time before entering the merchant system location. The user computing device receives a merchant beacon device identifier from the merchant beacon device and transmits the identifier to the payment processing system. The payment processing system transmits facial or signature templates to the merchant point of sale device corresponding to users whose user computing devices are in network range of the merchant beacon device and who are signed in to the payment application. If the facial or signature templates meet or exceed a threshold number, the merchant point of sale device displays the facial templates to the point of sale device operator and the operator identifies the user on the merchant point of sale device. If the facial or signature templates do not meet the threshold number, the merchant point of sale device requests similar facial templates or signature templates from the payment processing system for current customers at the merchant location and receives the requested similar facial or signature templates from the payment processing system. In this example, the merchant point of sale device displays the facial or signature templates and the similar facial or signature templates to the merchant point of sale device operator and the operator identifies the user facial or signature template on the merchant point of sale device by comparing the displayed templates to the actual physical profile or signature of the user. After identifying the user, the merchant point of sale device requests and receives account information of the identified user from the payment processing system and displays one or more accounts of the user. The merchant point of sale device operator selects an account of the user for use in a transaction. The merchant point of sale device transmits transaction details to the payment processing system, which generates a transaction authorization request to transmit to an issuer system associated with the user account selected for use in the transaction. The payment processing system receives an approval of the transaction authorization request and transmits a receipt to the merchant point of sale device.

In an example embodiment, a merchant system registers with a payment processing system. A merchant system operator installs a payment application on a merchant point of sale device. In another example, the merchant system operator installs the payment application on a plurality of merchant point of sale devices at a merchant system location. A merchant beacon device receives a beacon identifier code from a payment processing system. For example, the merchant system operator installs one or more merchant beacon devices at the merchant system location. The merchant beacon device broadcasts the merchant beacon identifier code via wireless communication at the merchant system location. The merchant system operator installs a merchant point of sale device at the merchant system location to correspond to the merchant beacon device identifier. In another example, a plurality of merchant point of sale devices are installed at the merchant system location, each merchant point of sale device corresponding to a particular merchant beacon device identifier. In yet another example, a particular merchant beacon device identifier may correspond to two or more particular merchant point of sale devices. In another example embodiment, the merchant point of sale device, instead of a merchant beacon device, broadcasts the merchant beacon identifier. The payment processing system receives a merchant point of sale device identifier and associates it with a corresponding beacon identifier broadcasted by the merchant beacon device or merchant point of sale device.

In an example embodiment, the user registers with a payment processing system. For example, the user accesses a payment processing system website via a user computing device associated with the user. The user registers with the payment processing system and downloads a payment application onto the user computing device. In an example embodiment, the payment processing system establishes a facial template or signature template associated with the user account. For example, the payment application displays a request for the user to capture a facial image via the user computing device. In another example, the payment application displays a request for the user to submit a signature via the user interface of the user computing device or otherwise submit a signature. The user selects an option to capture a facial image. In another example, the user selects an option to submit a signature. In an example, the payment application activates camera component of the user computing device and the users captures a facial image of himself. In another example, the user designs a signature on the user computing device user interface and selects an option on the user interface to submit the signature. The payment processing system receives the facial image or signature from the user computing device over a network. The payment processing system creates a facial template associated with the user account based on the received facial image. In another example, the payment processing system creates a signature template associated with the user account based on the received signature.

The user signs in to a payment application on the user computing device. The user carries the user computing device within a threshold distance of a merchant beacon device at the merchant system location. The user computing device receives a merchant beacon identifier broadcasted by the merchant beacon device and transmits the received merchant beacon identifier and a user account identifier to the payment processing system. The payment processing system receives the merchant beacon identifier and the user account identifier. The payment processing system extracts a facial template associated with the user account identifier and identifies a merchant camera device associated with the merchant beacon device identifier. In another example, the payment processing system extracts a signature template associated with the user.

The payment processing system transmits a facial template or signature template of the identified user to the merchant point of sale device associated with the merchant beacon device identifier. For example, a facial template or signature template associated with the identified user's account is transmitted to the merchant point of sale device. The merchant point of sale device receives the facial template or signature template of the user. The merchant camera device adds the facial template or signature template of the user to a current customer log. The merchant camera device periodically updates the current customer log based on updates received from the payment processing system. For example, the payment processing system transmits a subsequent facial template or signature template of a subsequent user that, carrying a user computing device via which the user is signed in to the payment application, enters a threshold distance of a merchant beacon device required to establish a wireless network connection. In this example, the payment processing system receives the merchant beacon device identifier transmitted by the user computing device, extracts a facial template or signature template of the subsequent user stored in a memory of the payment processing system, and transmits the extracted facial template or signature template of the subsequent user to the merchant camera device over a network. In another example, in response to detecting that the user computing device associated with a user in the current customer log is no longer maintaining a network connection with the merchant beacon device or is no longer signed in to the payment application, the payment processing system transmits a notice that a user has left a merchant location to the merchant camera device. In this example, the merchant camera device deletes the indicated user identifier and associated facial template or signature template from the current customer log.

The user approaches a merchant point of sale device. The merchant point of sale device operator totals items of the user for purchase. The merchant point of sale device operator asks the user to select a payment option. The user directs the merchant point of sale device operator to initiate a transaction via the payment application. For example, as previously discussed, the payment application is installed on both the merchant point of sale device and the user computing device. The merchant point of sale device operator selects an option on the merchant point of sale device to initiate a transaction using the payment application. The merchant point of sale device determines whether a predefined threshold number of facial templates or signature templates are saved in the current customer log accessible to the merchant point of sale device. For example, the payment processing system communicates with both the merchant camera device and the merchant point of sale device.

If the facial or signature templates meet or exceed a threshold number, the merchant point of sale device displays the facial templates to the point of sale device operator and the operator identifies the user on the merchant point of sale device. If the facial or signature templates do not meet the threshold number, the merchant point of sale device requests similar facial templates or signature templates from the payment processing system for current customers at the merchant location and receives the requested similar facial or signature templates from the payment processing system. In this example, the merchant point of sale device displays the facial or signature templates and the similar facial or signature templates to the merchant point of sale device operator and the operator identifies the user facial or signature template on the merchant point of sale device by comparing the displayed templates to the actual physical profile or signature of the user.

If the merchant point of sale operator is unable to identify the user based on facial recognition, the merchant point of sale device operator verifies the identity of the user via one or more identity documents submitted by the user. For example, the merchant point of sale device operator requests identification from the user and the user provides identification to the merchant point of sale device operator. In an example, identification comprises presenting one or more identity documents issued by a governmental authority, such as a driver's license, or issued a non-governmental entity, for example, a student identity card issued by a university. The merchant point of sale device operator verifies the user identity based on the identification provided by the user. For example, the merchant point of sale device operator compares one or more account details displayed on the merchant point of sale device against one or more data on the identification provided by the user. The merchant point of sale device operator inputs or confirms the user identity on the merchant point of sale device. If the merchant point of sale device operator is able to identity the user via facial recognition or signature recognition, the merchant point of sale device operator selects the displayed facial template corresponding to the current customer from the facial templates displayed on the merchant point of sale device.

In an example embodiment, the payment processing system receives an indication of the identity of the user from the merchant point of sale device. The payment processing system transmits account information corresponding to the identified user to the merchant point of sale device. For example, after receiving the identity of the user from the merchant point of sale device operator, receiving the identity of the user from the merchant point of sale device, or identifying the user, the payment processing system transmits information associated with one or more accounts of the identified user. The merchant point of sale device displays accounts of the identified user. The merchant point of sale device operator, upon direction of the user, selects a user account for transaction and confirms the transaction with permission of the user. The merchant point of sale device transmits transaction details to the payment processing system. For example, transaction details may comprise a total amount of the transaction, a selected user account for use in the transaction, an account of the merchant for use in the transaction, and other useful or relevant information. The payment processing system transmits a transaction authorization request to an issuer system. For example, the issuer system is associated with the user account selected for use in the transaction. The issuer system approves the transaction authorization request and transmits a transaction authorization approval to the payment processing system. The payment processing system transmits a transaction receipt to the merchant point of sale device.

By using and relying on the methods and systems described herein, the payment processing system, the merchant beacon device, the user computing device, and the merchant point of sale device enable the user to conduct a transaction with the merchant system without the user having to interact with the user computing device, as required in some current technology. As such, the systems and methods described herein may reduce the inputs required by the user via the user computing device and the inputs required by the merchant point of sale device operator to identify the user.

### Example System Architecture

Turning now to the drawings, in which like numerals indicate like (but not necessarily identical) elements throughout the figures, example embodiments are described in detail.

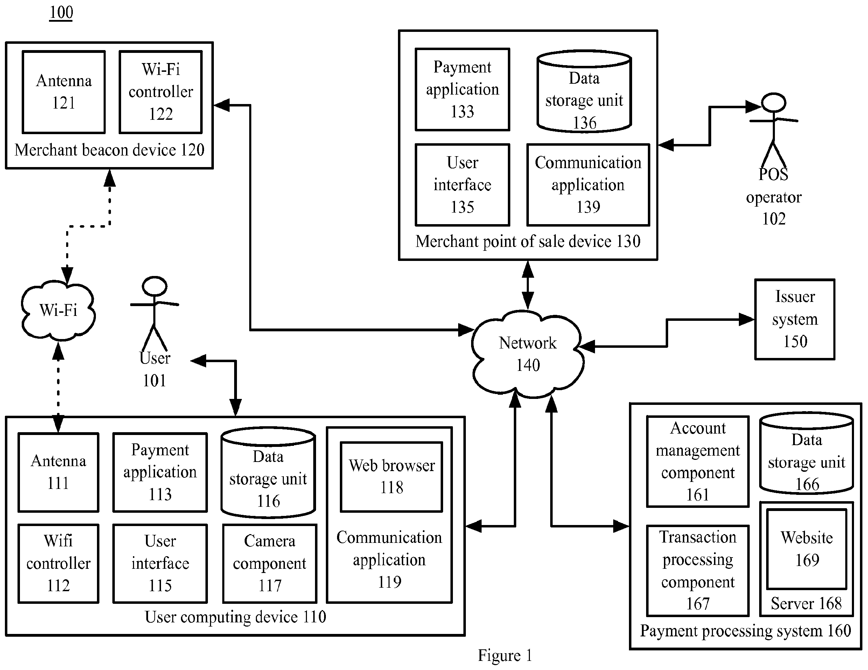

Figure 1 is a block diagram depicting a system 100 for conducting a transaction with facial recognition of a user 101, in accordance with certain example embodiments. As depicted in Figure 1, the system 100 includes network computing devices 110, 130, 150, and 160 that are configured to communicate with one another via one or more networks 140. In some embodiments, a user associated with a device must install an application and/or make a feature selection to obtain the benefits of the techniques described herein.

In example embodiments, the network 140 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy, NFC, or any combination thereof or any other appropriate architecture or system that facilitates the communication of signals, data, and/or messages. Throughout the discussion of example embodiments, it should be understood that the terms "data" and "information" are used interchangeably herein to refer to text, images, audio, video, or any other form of information that can exist in a computer-based environment.

Each network computing device 110, 120, 130, 150, and 160 includes a device having a communication module capable of transmitting and receiving data over the network 140. For example, each network computing device 110, 120, 130, 150, and 160 can include a server, desktop computer, laptop computer, tablet computer, a television with one or more processors embedded therein and / or coupled thereto, smart phone, handheld computer, personal digital assistant ("PDA"), or any other wired or wireless, processor-driven device. In the example embodiment depicted in Figure 1, the network computing devices 110, 120, 130, 150, and 160 are operated by users 101, merchant beacon device 120 operators, merchant point of sale ("POS") device 130 operators, issuer system 150 operators, and payment processing system 160, respectively.

An example user computing device 110 comprises an antenna 111, a Wi-Fi controller 112, a payment application 113, a user interface 115, a data storage unit 116, a camera component 117, a web browser 118, and a communication application 119.

In an example embodiment, the antenna 111 is a means of communication between the user computing device 110 and a merchant beacon device 120. In an example embodiment, a Wi-Fi controller 112 outputs through the antenna 111 a radio signal, or listens for radio signals from the merchant beacon device 120. In another example embodiment a Bluetooth controller or a near field communication ("NFC") controller is used.

In an example embodiment, the Wi-Fi controller 112 is capable of sending and receiving data, performing authentication and ciphering functions, and directing how the user computing device 110 will listen for transmissions from the merchant beacon device 120 or configuring the user computing device 110 into various power-save modes according to Wi-Fi-specified procedures. In another example embodiment, the user computing device 110 comprises a Bluetooth controller or an NFC controller capable of performing similar functions. An example Wi-Fi controller 112 communicates with the payment application 113 and is capable of sending and receiving data over a wireless, Wi-Fi communication channel. In another example embodiment, a Bluetooth controller 112 or NFC controller 112 performs similar functions as the Wi-Fi controller 112 using Bluetooth or NFC protocols. In an example embodiment, the Wi-Fi controller 112 activates the antenna 111 to create a wireless communication channel between the user computing device 110 and the merchant beacon device 120. The user computing device 110 communicates with the merchant beacon device 120 via the antenna 111. In an example embodiment, when the user computing device 110 has been activated, the Wi-Fi controller 112 polls through the antenna 111 a radio signal, or listens for radio signals from the merchant beacon device 120.

In an example embodiment, the payment application 113 is a program, function, routine, applet, or similar entity that exists on and performs its operations on the user computing device 110. In certain example embodiments, the user 101 must install the payment application 113 and/or make a feature selection on the user computing device 110 to obtain the benefits of the techniques described herein. In an example embodiment, the user 101 may access payment application 113 on the user computing device 110 via the user interface 115. In an example embodiment, the payment application 113 may be associated with the payment processing system 160. In another example embodiment, the payment application 113 may be associated with a merchant system associated with the merchant beacon device 120 and the merchant point of sale device 130. In yet another example embodiment, two payment applications 113 exist, one associated with the merchant system and another associated with the payment processing system 160.

In an example embodiment, the user interface 115 enables the user 101 to interact with the payment application 113 and/or web browser 118. For example, the user interface 115 may be a touch screen, a voice-based interface, or any other interface that allows the user 101 to provide input and receive output from an application or module on the user computing device 110. In an example embodiment, the user 101 interacts via the user interface 115 with the payment application 113 and/or web browser 118 to configure user 101 accounts on the payment processing system 160. In another example embodiment, the user 101 interacts via the user interface 115 with the payment application 113 and/or the web browser 118 to enable payments, if needed. In an example embodiment, the user interface 115 enables the user 101 to submit a signature of the user 101 to the payment application 113 and/or payment processing system 160. For example, the user interface 115 may comprise a pen pad that enables the user 101 to draw his signature on the user interface 115 of the user computing device 110 for submission to the payment application 113 and/or payment processing system 160.

In an example embodiment, the data storage unit 116 comprises a local or remote data storage structure accessible to the user computing device 110 suitable for storing information. In an example embodiment, the data storage unit 116 stores encrypted information, such as HTML5 local storage.

In an example embodiment, the camera component 117 may be any component, application, or function of the user computing device 110 that obtains a digital image. The camera component 117 may be resident on the user computing device 110 or in any manner logically connected to the user computing device 110. For example, the camera component 117 may be connected to the user computing device 110 via the network 140. The camera component 117 may be capable of obtaining individual images or a video scan. Any other suitable image capturing device may be represented by the camera component 117. The camera component 117, in response to user 101 selection of an option to capture an image on the payment application 113 or otherwise in response to a selection by the user 101 on the computing device 110, is capable of obtaining an image and/or video of the user 101 or a signature of the user 101 to transmit to the payment processing system 160 to use to create a facial template or signature template of the user 101.

In an example embodiment, the user 101 can use a communication application 119, such as a web browser 118 application or a stand-alone application, to view, download, upload, or otherwise access documents or web pages via a distributed network 140.

In an example embodiment, the web browser 118 can enable the user 101 to interact with web pages using the user computing device 110. In an example embodiment, the user 101 may access the user's 101 account maintained by the payment processing system 160 via the web browser 118. In another example embodiment, the user 101 may access the a merchant system website via the web browser 118. In certain example embodiments described herein, one or more functions performed by the payment application 113 may also be performed by a web browser 118 application associated with the payment processing system 160.

In an example embodiment, the communication application 119 can interact with web servers or other computing devices connected to the network 140, including the user computing device 110 and a web server of a merchant system.

In certain example embodiments, one or more functions herein described as performed by the payment application 113 may also be performed by a web browser 118 application, for example, a web browser 118 application associated with a merchant system website or associated with the payment processing system 160. In certain example embodiments, one or more functions herein described as performed by the payment application 113 may also be performed by the user computing device 110 operating system. In certain example embodiments, one or more functions herein described as performed via the web browser 118 may also be performed via the payment application 113.

An example merchant beacon device 120 comprises an antenna 121 and a Wi-Fi controller 122. In an example embodiment, a merchant system location comprises one or more merchant beacon devices 120 installed at the merchant system location. In an example embodiment, each installed merchant beacon device 120 is associated by a payment processing system 160 with a particular merchant point of sale device 130 installed at the merchant location. For example, the payment processing system 160 may comprise a database that correlates merchant beacon device 120 identifiers with merchant point of sale devices 130. For example, a merchant point of sale device 130 identifier may comprise hardware identifier specific to the device such as a serial number or a MAC ID. In another example, a merchant beacon device 120 identifier may comprise a hardware identifier specific to the beacon device or an identifier generated by the payment processing system 160 and stored in the merchant beacon device 120. An example merchant beacon device 120 is programmed to broadcast, emit, or otherwise transmit a particular merchant beacon device 120 identifier over a wireless network 140 to any user computing devices 110 within a threshold distance required to maintain the wireless network 140. For example, the wireless network may comprise a Wi-Fi network 140, a Bluetooth network 140, an NFC network 140, or any other appropriate wireless network 140.

In an example embodiment, the antenna 121 is a means of communication between the user computing device 110 and a merchant beacon device 120. In an example embodiment, a Wi-Fi controller 122 outputs through the antenna 121 a radio signal, or listens for radio signals from the user computing device 110. In another example embodiment a Bluetooth controller or a near field communication ("NFC") controller is used. In an example embodiment, the Wi-Fi controller 122 outputs through the antenna 121 a radio signal, or listens for radio signals from the payment card device 120.

In an example embodiment, the Wi-Fi controller 122 is capable of sending and receiving data, performing authentication and ciphering functions, and directing how merchant beacon device 120 will listen for transmissions from the user computing device 110 or configuring the merchant beacon device 120 into various power-save modes according to Wi-Fi-specified procedures. In another example embodiment, the merchant beacon device 120 comprises a Bluetooth controller or an NFC controller capable of performing similar functions. An example Wi-Fi controller 122 communicates with the payment application 113 and is capable of sending and receiving data over a wireless, Wi-Fi communication channel. In another example embodiment, a Bluetooth controller 122 or NFC controller 122 performs similar functions as the Wi-Fi controller 122 using Bluetooth or NFC protocols. In an example embodiment, the Wi-Fi controller 122 activates the antenna 121 to create a wireless communication channel between the user computing device 110 and the merchant beacon device 120. The merchant beacon device 120 communicates with the user computing device 110 via the antenna 121. In an example embodiment, when the merchant beacon device 120 has been activated, the Wi-Fi controller 122 polls through the antenna 121 a radio signal, or listens for radio signals from the user computing device 110.

An example merchant point of sale device 130 comprises a payment application 133, a user interface 135, a data storage unit 136, and a communication application 139.

In an example embodiment, the payment application 133 is a program, function, routine, applet, or similar entity that exists on and performs its operations on the merchant point of sale device 130. In certain example embodiments, the merchant point of sale ("POS") device operator 102 or other merchant system operator must install the payment application 133 and/or make a feature selection on the merchant point of sale device 130 to obtain the benefits of the techniques described herein. In an example embodiment, the merchant POS device operator 102 may access the payment application 133 on the merchant POS device 130 via the user interface 135. In an example embodiment, the payment application 133 may be associated with the payment processing system 160. In another example embodiment, the payment application 133 may be associated with a merchant system associated with the merchant beacon device 120. In yet another example embodiment, two payment applications 133 exist, one associated with the merchant system and another associated with the payment processing system 160.

In an example embodiment, the user interface 135 enables the merchant POS device operator 102 to interact with the merchant POS device 130. For example, the user interface 135 may be a touch screen, a voice-based interface, or any other interface that allows the merchant POS device operator 102 to provide input and receive output from an application on the merchant POS device 130. In an example embodiment, the merchant POS device operator 102 interacts via the user interface 135 with the payment application 133.

In an example embodiment, the data storage unit 136 comprises a local or remote data storage structure accessible to the merchant POS device 130 suitable for storing information. In an example embodiment, the data storage unit 136 stores encrypted information, such as HTML5 local storage.

In an example embodiment, the communication application 139, such as a web browser application or a stand-alone application, enables an operator of the merchant POS device 130 to view, download, upload, or otherwise access documents or web pages via a distributed network 140. For example, the communication application 139 may enable communication over the network 140 with the payment processing system 160.

An example issuer system 150 approves or denies a payment authorization request received from the payment processing system 160. In an example embodiment, the issuer system 150 communicates with the payment processing system 160 over the network 140. In an example embodiment, the issuer system 150 communicates with an acquirer system to approve a credit authorization and to make payment to the payment processing system 160 and/or merchant system. For example, the acquirer system is a third party payment processing company.

An example payment processing system 160 comprises an account management component 161, a facial recognition component 163, a data storage unit 166, and a transaction processing component 167.

In an example embodiment, the account management component 161 manages one or more user 101 accounts. In an example embodiment, a user 101 account may comprise a digital wallet account, an email account, a social networking account, or any other appropriate account associated with the payment processing system 160. In an example embodiment, the account management component 161 communicates with a payment application 113 operating on a user computing device 110 associated with a user 101 having a user 101 account with the payment processing system 160. In an example embodiment, the user 101 enters payment account information into the user 101 account via the payment application 113 and the account management component 161 receives the payment account information over the network 140 and associates the received payment account information with the user 101 account.

In an example embodiment, the data storage unit 166 comprises a local or remote data storage structure accessible to the payment processing system 160 suitable for storing information. In an example embodiment, the data storage unit 166 stores encrypted information, such as HTML5 local storage.

In an example embodiment, the transaction processing component 167 receives transaction details from a merchant POS device 130 and a request to initiate a transaction. Example transaction details comprise merchant system account information, a total amount of the transaction, and a user 101 selection of a user 101 payment account associated with the user's 101 account with the payment processing system 160. For example, the user's 101 account is a digital wallet account comprising one or more payment account information corresponding to one or more respective payment accounts of the user 101. In an example embodiment, the transaction processing component 167 extracts payment account information from the user 101 account corresponding to the user 101 selection of the user 101 payment account received in the transaction details from the merchant POS device 130. In an example embodiment, the transaction processing component 167 transmits a payment authorization request to an issuer system 150 or other appropriate financial institution associated with the payment account selected by the user 101 for use in the transaction. An example payment authorization request may comprise merchant system payment account information, user 101 payment account information, and a total amount of the transaction. In an example embodiment, after the issuer system 150 processes the payment authorization request, the transaction processing component 167 receives an approval or denial of the payment authorization request from the issuer system 150 over the network 140. In an example embodiment, the transaction processing component 167 transmits a receipt to the merchant POS device 130 and/or the user computing device 110 comprising a summary of the transaction.

It will be appreciated that the network connections shown are example and other means of establishing a communications link between the computers and devices can be used. Moreover, those having ordinary skill in the art having the benefit of the present disclosure will appreciate that the user computing device 110, the merchant beacon device 120, the merchant point of sale device 130, the issuer system 150, and the payment processing system 160 illustrated in Figure 1 can have any of several other suitable computer system configurations. For example, a user computing device 110 embodied as a mobile phone or handheld computer may or may not include all the components described above.

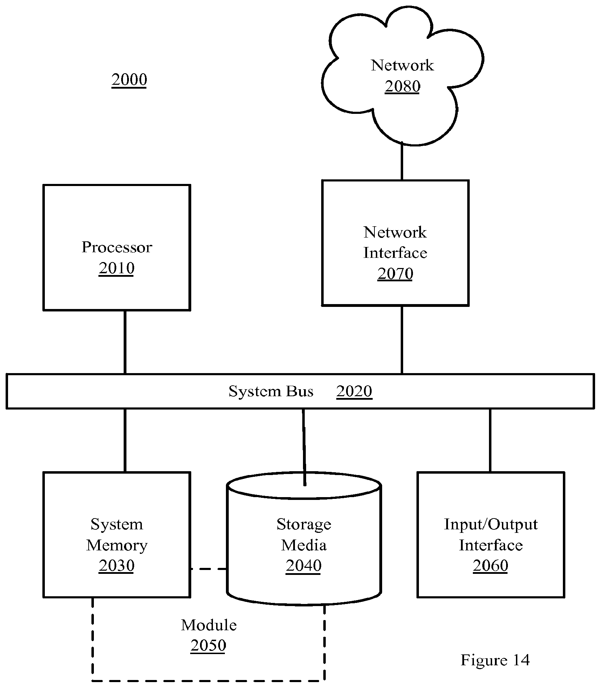

In example embodiments, the network computing devices and any other computing machines associated with the technology presented herein may be any type of computing machine such as, but not limited to, those discussed in more detail with respect to Figure 15. Furthermore, any modules associated with any of these computing machines, such as modules described herein or any other modules (scripts, web content, software, firmware, or hardware) associated with the technology presented herein may by any of the modules discussed in more detail with respect to Figure 14. The computing machines discussed herein may communicate with one another as well as other computing machines or communication systems over one or more networks, such as network 140. The network 140 may include any type of data or communications network, including any of the network technology discussed with respect to Figure 14.

### Example Processes

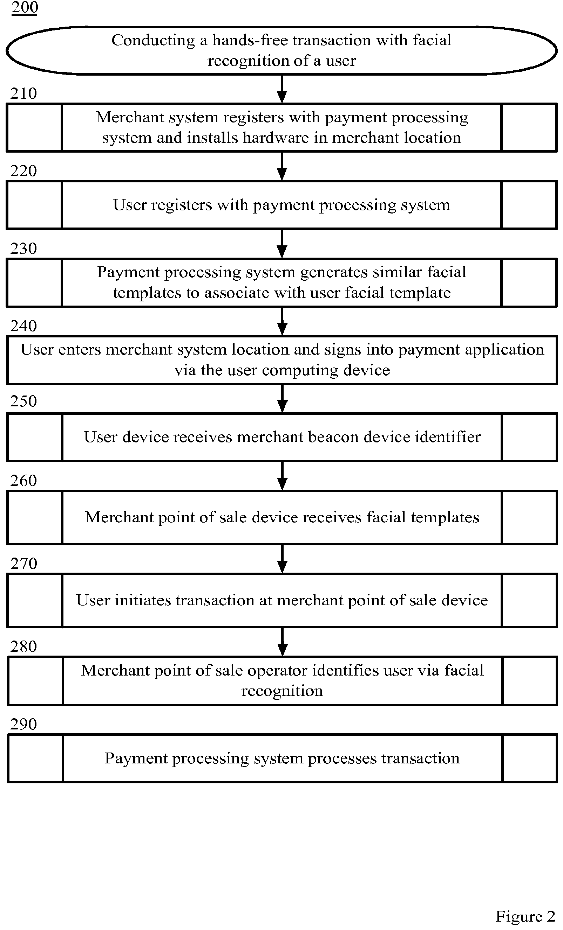

The example methods illustrated in Figures 2-13 are described hereinafter with respect to the components of the example operating environment 100. The example methods of Figures 2-13 may also be performed with other systems and in other environments.

Figure 2 is a block diagram depicting a method 200 for conducting a transaction with facial recognition of a user 101, in accordance with certain example embodiments. The method 200 is described with reference to the components illustrated in Figure 1.

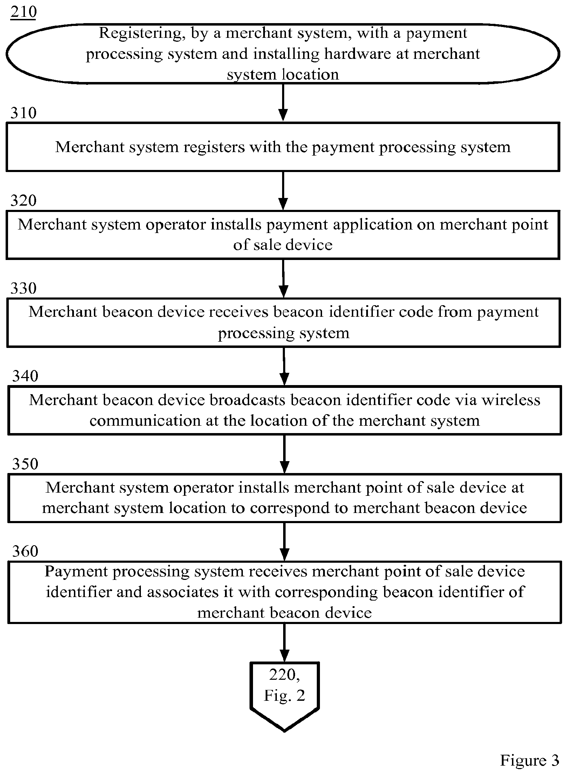

In block 210, the merchant system registers with the payment processing system 160 and installs hardware in a merchant location. The method for registering, by a merchant system, with a payment processing system 160 and installing hardware at a merchant system location is described in more detail hereinafter with reference to the method described in Figure 3.

Figure 3 is a block diagram depicting a method 210 for registering, by a merchant system, with a payment processing system 160 and installing hardware at a merchant system location, in accordance with certain example embodiments. The method 210 is described with reference to the components illustrated in Figure 1.

In the example embodiments described herein, the merchant system does not need to install hardware at the example merchant system location in any particular order. The method 210 describes one example method of installing hardware at the merchant location. However, the merchant system or other system installing the merchant hardware does not need to install the merchant POS device 130 or the merchant beacon device 120 in the order described herein.

In block 310, a merchant system registers with the payment processing system 160. In an example embodiment, an agent of the merchant system accesses a payment processing system 160 website and registers for a merchant account with the payment processing system 160 via the website. In an example embodiment, the merchant system adds payment account information associated with a merchant account to the merchant account managed by the payment processing system 160. In an example embodiment, the merchant system comprises one or more merchant system locations. For example, the merchant system may comprise one or more physical store locations. An example merchant location comprises one or more merchant point of sale ("POS") devices 130. In an example embodiment, one or more merchant POS device operators 102 operate the one or more merchant POS devices 130 at the merchant system location.

In block 320, a merchant system operator installs the payment application 133 on the merchant point of sale device 130. In another example embodiment, the merchant system operator purchases a merchant POS device 130 from the payment processing system 160 or otherwise obtains the merchant POS device 130 with the payment application 133 pre-installed on the merchant POS device 130. In an example embodiment, the merchant POS device 130 is able to communicate with the payment processing system 160 over a network 140. In an example embodiment, the merchant POS device 130 communicates with the payment processing system 160 via the payment application 133. For example, the merchant POS device 130 may be able to transmit transaction details to the payment processing system 160 via the payment application 133 over the network 140 to enable the payment processing system 160 to process a transaction. In another example, the merchant POS device 130 may be able to receive a receipt from the payment processing system 160 that notifies a merchant POS device operator 102 as to whether a transaction was successful or not.

In block 330, the merchant beacon device 120 receives a beacon identifier code from the payment processing system 160. In an example embodiment, the merchant system receives a beacon identifier from the payment processing system 160 and installs or otherwise saves the beacon identifier on the merchant beacon device 120. In an example, the merchant beacon device 120 receives the beacon identifier code over the network 140 from the payment processing system 160. In another example, the merchant beacon device 120 receives the beacon identifier code from the payment processing system 160 via the merchant point of sale device 130 or otherwise receives the beacon device identifier. In an example embodiment, a merchant system operator installs the merchant beacon device 120 in proximity to a merchant POS device 130. In an example embodiment, the merchant system operator installs a plurality of merchant beacon devices 120, each merchant beacon device 120 in proximity to one or more associated merchant POS devices 130. An example merchant beacon device 120 is able to establish a local network 140 connection to one or more user computing devices 110 located within a threshold proximity to the merchant beacon device 120. For example, the threshold proximity depends on the network 140 communication protocol utilized by the merchant beacon device 120. In another example embodiment, one or more functions described as performed by the merchant beacon device 120 may instead be performed by the merchant POS device 130.

In block 340, the merchant beacon device 120 broadcasts the beacon identifier code via wireless communication at the location of the merchant system. For example, the merchant beacon device 120 may broadcast, emit, or otherwise transmit data comprising the beacon identifier via Wi-Fi, Bluetooth, Bluetooth low energy ("BLE"), near field communication ("NFC"), or other appropriate communication protocol operable to establish a network 140 connection between the merchant beacon device 120 and one or more user computing devices 110 located at the merchant system location within a threshold proximity to the merchant beacon device 120.

In block 350, a merchant system operator installs the merchant POS device 130 at the merchant system location to correspond to the merchant beacon device 120. In an example embodiment, a merchant beacon device 120 is installed in proximity to a particular merchant POS device 130. In another example embodiment, a merchant beacon device 120 is installed in proximity to two or more particular merchant POS devices 130.

In block 360, the payment processing system 160 receives a merchant point of sale device 130 identifier and associates it with the corresponding beacon identifier code of the merchant beacon device 120. In an example embodiment, the merchant system and/or the payment processing system 160 configures the merchant point of sale device 130 so that the merchant point of sale device 130 is able to communicate with the payment processing system 160 over the network 140. An example merchant point of sale device 130 identifier comprises a hardware identifier, a MAC address, or other useful or relevant identifier associated with the merchant point of sale device 130. In an example embodiment, the payment processing system 160 comprises a database comprising merchant point of sale device 130 identifiers and associated beacon identifiers for merchant beacon device 120 identifiers for a particular merchant system location. In an example embodiment, the merchant point of sale device 130 transmits the merchant beacon device 120 identifier to the payment processing system 160. For example, the merchant point of sale device 130, during the setup and installation process, may establish a network 140 connection with the merchant beacon device 120 and receive the merchant beacon device 120 identifier over the network 140. In another example embodiment, the payment processing system 160 receives the merchant point of sale device 130 identifier, extracts one or more merchant beacon device 120 identifiers from the database, and associates the merchant point of sale device 130 identifier with one or more of the one or more extracted merchant beacon device 120 identifiers. In yet another example embodiment, the merchant system operator installs the one or more merchant beacon devices 120 after installing the one or more merchant point of sale devices 130. In this example embodiment, the payment processing system 160 generates a merchant beacon device identifier to associate with a merchant point of sale device 130 identifier and transmits the generated merchant beacon device identifier to the merchant system. In this example embodiment, the merchant system operator manually configures the merchant beacon device 120 to broadcast, emit, or otherwise transmit the merchant beacon device identifier assigned by the payment processing system 160 over a network 140.

In certain example embodiments, the merchant beacon device 120 is a component of the merchant POS device 130 or are wirelessly or physically connected to the merchant POS device 130 and controlled by one or more processors of the merchant POS device 130. In certain example embodiments, certain functions described herein as performed by the merchant beacon device 120 may also be performed by the merchant POS device 130.

From block 360, the method 210 proceeds to block 220 of Figure 2.

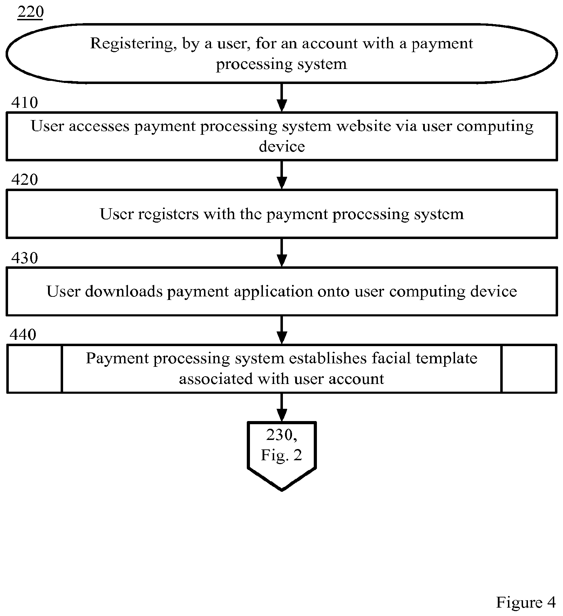

Returning to Figure 2, in block 220, the user 101 registers with the payment processing system 160. The method for registering, by a user 101, for an account with a payment processing system 160 is described in more detail hereinafter with reference to the method 220 described in Figure 4.

Figure 4 is a block diagram depicting a method 220 for registering, by a user 101, for an account with a payment processing system 160, in accordance with certain example embodiments. The method 220 is described with reference to the components illustrated in Figure 1.

In block 410, the user 101 accesses the payment processing system 160 website 169. For example, the user 101 accesses the payment processing system 160 via the web browser 118 of the user computing device 110. In another example, the user 101 may otherwise contact the payment processing system 160 to register for a user 101 account.

In block 420, the user 101 registers with the payment processing system 160. The user 101 may obtain a user account number, receive the appropriate applications and software to install on the user computing device 110, request authorization to participate in payment processing, or perform any action required by the payment processing system 160. The user 101 may utilize the functions of the user computing device 110, such as the user interface 115 and the web browser 118, to register and configure a user 101 account. In an example embodiment, the user 101 may enter payment account information associated with one or more user 101 accounts, for example, one or more credit accounts, one or more bank accounts, one or more stored value accounts, and/or other appropriate accounts into the user 101 account maintained by the payment processing system 160.

In block 430, the user 101 downloads the payment application 113 onto the user computing device 110. In another example embodiment, the user 101 purchases or otherwise obtains the user computing device 110 comprising the payment application 113 pre-installed on the user computing device 110. In an example embodiment, the payment application 113 operating on the user computing device 110 is able to communicate with the payment processing system 160 over the network 140. In an example embodiment, the user 101 may configure user 101 account settings or add, delete, or edit payment account information via the payment application 113. In an example embodiment, the user 101 may select an option to enable or disable the permission of the payment processing system 160 to process transactions. For example, a transaction comprises a transaction wherein the user 101 does not need to interact with the user computing device 110 or requires minimal user 101 interaction with the user computing device 110 to initiate a transaction with the merchant system.

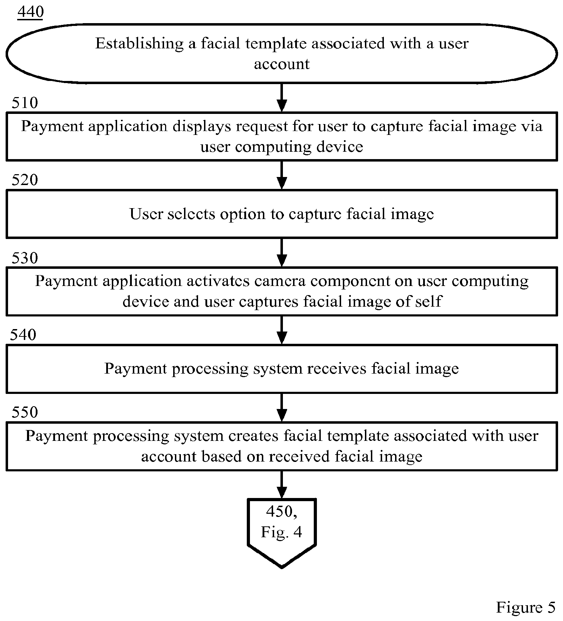

In block 440, the payment processing system 160 establishes a facial template associated with the user 101 account. The method for establishing a facial template associated with a user 101 account is described in more detail hereinafter with reference to the method 440 described in Figure 5. In certain example embodiments, instead of establishing a facial template associated with the user 101 account or in addition to establishing a facial template associated with the user account, the payment processing system 160 establishes a signature template associated with the user 101 account.

Figure 5 is a block diagram depicting a method 440 for establishing a facial template associated with a user 101 account, in accordance with certain example embodiments. The method 440 is described with reference to the components illustrated in Figure 1.

In block 510, the payment application 113 displays a request for the user 101 to capture a facial image via the user computing device 110. In an example embodiment, the payment application 113 displays the request via the user interface 115. In an example, the user interface 115 may display a request that reads, "to enable transactions, we need an image of your face. Would you like submit a facial image now?" In this example, the user 101 may select an option to take a current picture or may otherwise select a picture stored on the user computing device 110. In another example, the payment application 113 displays a request via the user interface 115 for the user 101 to capture an image of the user's 101 signature or otherwise submit a signature of the user 101 via the user interface 115.

In block 520, the user 101 selects an option to capture a facial image. For example, the user 101 actuates an object on the user interface 115 that reads, "yes, I would like to take a picture now." In another example, the user 101 selects an option to capture an image of the user's 101 signature or selects an option to submit a signature of the user 101 via the user interface 115 of the user computing device 110.

In block 530, the payment application 113 activates the camera component 117 on the user computing device 110 and the user 101 captures a facial image of himself. In an example embodiment, the user computing device user interface 115 may display a live camera feed of the user 101 to aid the user 101 in aligning the user's 101 face to take the facial image. In an example embodiment, the payment application 113 may display on the user computing device 110 a box or other perimeter on the user interface 115 within which the user 101 should align his face to take a picture of a required size predetermined by the payment processing system 160. In an example embodiment, the user 101 may actuate an object on the user interface 115 to capture the image. In this example embodiment, in response to the user 101 actuating the object on the user interface 115, the camera component 117 receives a command from the payment application 113 to capture an image of the user 101. An example facial image may comprise a digital image of the face of a user 101. In an example embodiment, the payment processing system 160 may establish guidelines for users 101 in submitting facial images. For example, the payment application 113 may direct the user 101 to remove any hats, head coverings, eyeglasses, or other objects or accessories that may occlude regions of the user's 101 face so that payment application 160 may receive an complete depiction of the user's 101 face. In another example embodiment, the user 101 captures an image of the signature of the user 101 as requested by the payment application 113.

In block 540, the payment processing system 160 receives the facial image. For example, the payment application 113 transmits the facial image of the user 101 to the payment processing system 160 via the network 140. In an example embodiment, the payment processing system 160 associates the received facial image with the user 101 account. For example, the payment processing system 160 is able to identify the user 101 account to associate with the received image because the user 101 is currently logged in to the payment application 113 on the user computing device 110 at the time the facial image is transmitted to the payment processing system 160. In certain example embodiments, the payment processing system 160 determines if the received facial image is a valid facial image or an invalid facial image. For example, a valid facial image complies with all guidelines predetermined by the payment processing system 160 and an invalid facial image does not comply with one or more the guidelines. For example, if a user 101 submits a facial image that comprises incorrect dimensions, if part or all of the user's 101 face is occluded, or if the image is too dark or too bright, the payment processing system 160 rejects the invalid facial image and transmits a request to the user computing device 110 directing the user 101 to capture a subsequent facial image to transmit to the payment processing system 160. In this example, the user computing device 110 receives and displays the request, the user 101 captures a subsequent facial image via the user computing device 110, and the user computing device 110 transmits the subsequent facial image to the payment processing system 160 via the network 140. In another example embodiment, the payment processing system 160 receives an image of the signature of the user 101 from the user computing device 110 or otherwise receives a drawing of the user 101 signature submitted by the user 101 via the user interface 115 of the user computing device 110.

In an example embodiment, the payment processing system 160 stores the received image of the user 101 signature or the received facial image of the user 101 in a memory or storage device of the payment processing system 160. In an example embodiment, the payment processing system 160 also stores metadata associated with the received image, for example, the image's embedding value.

In block 550, the payment processing system 160 creates a facial template associated with the user 101 account based on the received facial image. In an example, the facial template is of a predetermined size, for example, a 100 ― 500 KB facial template. In an example, the payment processing system 160 generates a facial template comprising a computer code representation of the digital facial image. For example, the facial template may describe key features of the facial image of the user 101, such as shape, color, line, value, space, form, texture, or other useful or relevant features of the image or of particular regions of the image. In an example embodiment, the payment processing system 160 stores the generated facial template associated with the user 101 in the data storage unit 166 associated with the payment processing system 160. For example, the payment processing system 160 database may comprise a table or other means by which it correlates each user 101 account identifier with an associated facial template of the user 101. In another example embodiment, the payment processing system 160 creates a signature template associated with the user 101 account based on the received image of the user 101 signature or based on a drawing of the user 101 signature submitted by the user 101 at the user interface 115 of the user computing device 110. In an example embodiment, the payment processing system 160 generates a particular template identifier for the facial template or signature template associated with the user 101 account and stores the template identifier in the user 101 account, for example, by storing the information in association with a record of the user 101 account.

From block 550, the method 440 proceeds to block 230 in Figure 2.

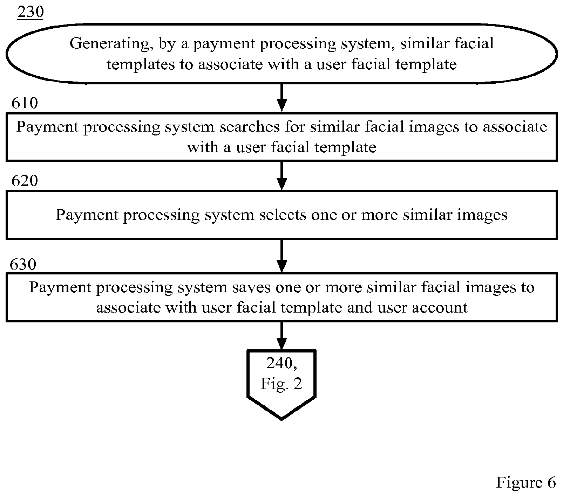

Returning to block 230, in Figure 2, the payment processing system 160 generates similar facial templates to associate with a user 101 facial template. The method for generating similar facial templates to associate with a user 101 facial template is described in more detail hereinafter with reference to the method 230 described in Figure 6.

Figure 6 is a block diagram depicting a method 230 for generating, by a payment processing system 160, similar facial templates to associate with a user 101 facial template, in accordance with certain example embodiments. The method 230 is described with reference to the components illustrated in Figure 1. In other example embodiments, a payment processing system 160 generates similar signature templates to associate with a user 101 signature template.

In block 610, the payment processing system 160 searches for similar facial images to associate with a user 101 facial template. An example facial template comprises a computer code representation of the digital facial image. For example, the facial template may describe key features of the facial image of the user 101, such as shape, color, line, value, space, form, texture, or other useful or relevant feature of the image or of particular regions of the image. In an example embodiment, the payment processing system 160 comprises an image database comprising a plurality of facial images. In another example embodiment, the payment processing system 160 is able to communicate with and search through an image database comprising multiple facial images that is not a component of the payment processing system 160. In an example embodiment, the payment processing system 160 compares one or more features described by the user 101 template to one or more facial images in the image database. For example, the one or more features of the facial images may comprise one or more of size, color tone, distance between sub-regions of the image, shape, line, value, space, form, texture, or other useful or relevant features. In an example embodiment, the payment processing system 160 utilizes an appropriate image recognition technology to recognize the one or more features of the images in the image database being compared by the payment processing system 160 against the user facial template.

In block 620, the payment processing system 160 selects one or more similar images. For example, the payment processing system 160 selects the one or more similar images from the image database based on comparing one or more features described by the user 101 template to corresponding features of one or more facial images or signature images in the image database. In an example embodiment, the payment processing system 160 selects a predefined number of the most similar facial images from the image database based on the comparison of corresponding features. In an example, the payment processing system 160 maps the similar images in an embedding space. In this example, images of faces or signatures that are more similar to the user 101 facial template or user 101 signature template are mapped closer together in the embedding space than images that are less similar to the user 101 facial or signature template. In an example embodiment, the payment processing system 160 selects a predetermined number of images within a predetermined range of distance metric in the embedding space. For example, the predetermined range is determined so that the selected images are not too similar to the user 101 facial or signature template that they would be indistinguishable from the user 101 template but also not too different from the user 101 template. The range is configurable such that a desired similarity or lack of similarity is achieved. A greater similarity results in a more difficult determination for the merchant to identify the correct facial image and thus requires more effort by the merchant to identify the correct facial image of the user 101 at the merchant location given the presented facial images. A lesser similarity results in a less difficult determination for the merchant to identify the correct facial image and thus requires less effort by the merchant to identify the correct facial image of the user 101 at the merchant location given the presented facial images.

In block 630, the payment processing system 160 saves the one or more similar facial images to associate with the user 101 facial template and the user 101 account. For example, the payment processing system 160 saves the one or more similar facial images or similar signature images in a memory of the payment processing system 160. For example, the payment processing system 160 saves the one or more similar facial images in an image data base of the payment processing system 160 and/or in the data storage unit 166. In an example embodiment, the payment processing system 160 assigns each saved facial image or signature image an image identifier. In this example embodiment, the payment processing system 160 saves the image identifier of each of the saved one or more facial images similar to the user 101 facial template in the account of the user 101. In an example embodiment, an example image identifier is used by the payment processing system 160 to retrieve the saved facial image or signature image.

In certain other example embodiments, the payment processing system 160 generates similar signature templates based on the signature template of the user 101. For example, the payment processing system 160 uses appropriate technology to generate similar signatures that are somewhat different from the user's 101 true signature. For example, the user's signature comprises "John H. Smith." In this example, three similar signature templates may comprise "J. H. Smith," "John Smith," or "J. H. S." In another example, the payment processing system 160 may modify the font or other characteristics of the user 101 signature to generate the similar signature templates.

In an example embodiment, the payment processing system 160 generates a particular template identifier for each of the similar facial templates or similar signature templates associated with the user 101 account and stores the template identifiers in the user 101 account. In an example embodiment, the payment processing system 160 generates links to similar or nearby images associated with the user 101 facial image or user 101 signature image comprising the particular template identifiers for each of the similar images. For example, the links to similar or nearby images can be updated over time by the payment processing system 160.

From block 630, the method 230 proceeds to block 240 in Figure 2.

Returning to block 240, in Figure 2, the user 101 signs into the payment application 113 via the user computing device 110 either before or after entering the merchant system location. In an example embodiment, by signing in to the payment application 113 the user 101 enables the payment processing system 160 to process transactions initiated by the user 101 at the merchant system location, including the facial recognition features of the payment application 113. In another example embodiment, the user 101 opens the payment application 113 on the user computing device 110 and enters the merchant system location with the user computing device 110 already signed in to the payment application 113. In another example embodiment, the user 101 signs in to the payment application 113 at a time before entering the merchant system location and configures one or more settings on the payment application 113 to permit the payment processing system 160 to process transactions. In this example embodiment, the user 101 does not have to sign in while at the merchant location to enable a transaction. Additionally, the user 101 may access the payment application 113 and configure one or more settings to revoke permission for the payment processing system 160 to process transactions or to otherwise disable the facial recognition features of the payment application 113.

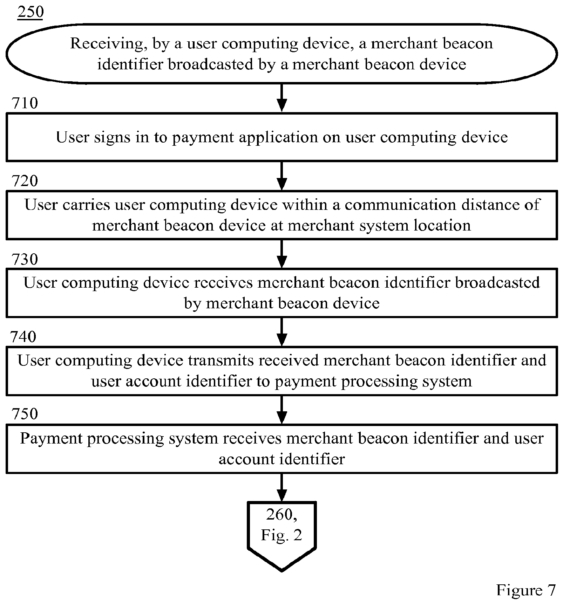

In block 250, the user device receives a merchant beacon device 120 identifier. The method for receiving, by a user computing device 110, a merchant beacon identifier broadcasted by a merchant beacon device 120 is described in more detail hereinafter with reference to the method 250 described in Figure 7.

Figure 7 is a block diagram depicting a method 250 for receiving, by a user computing device 110, a merchant beacon identifier broadcasted by a merchant beacon device 120, in accordance with certain example embodiments. The method 250 is described with reference to the components illustrated in Figure 1.

In block 710, the user 101 signs in to the payment application 113 on the user computing device 110. In an example embodiment, the user 101 may have a username and password associated with the user 101 account maintained by the payment processing system 160. In an example embodiment, the user 101 opens the payment application 113 on the user computing device 110 and enters a username and/or password via the user interface 115 to sign in to the payment application 113. In an example embodiment, when the user 101 is signed in to the payment application 113, the payment application is able to communicate with the payment processing system 160 over the network 140. In this example embodiment, when the user 101 is not signed in to the payment application 113, the payment application does not communicate with the payment processing system 160 even if the a network 140 connection is available. In an example embodiment, the user 101 may sign out of the payment application 113 at any time by actuating one or more objects on the user interface 115 of the user computing device 110. In an example embodiment, after signing in to the payment application 113, the user 101 configure one or more user 101 account settings, add, edit, or delete user 101 payment account information, and/or change user 101 preferences. In certain example embodiments, a user 101 may be required to make a feature selection to obtain the benefits of the techniques described herein. For example, the user 101 may have to enable one or more user 101 account settings to enable transactions according to the methods described herein.

In an example embodiment, payment application 113 may provide options, data, configurable alerts, and other suitable features to the user 101. For example, the payment application 113 may comprise a listing of merchant systems and merchant locations that participate in payment transactions according to one or more of the methods described herein. The listing may be updated periodically from the payment processing system 160. The payment application 113 may notify the user 101 when the user 101 is within a configured vicinity of a participating merchant system. The payment application 113 may provide the user 101 with options to update payment preferences. The payment application 113 may provide the user 101 with a listing of recent transactions. The payment application 113 may provide any other suitable information to the user 101.

In block 720, the user 101 carries the user computing device 110 within a communication distance of the merchant beacon device 120 at the merchant system location. In an example embodiment, the user 101 enters a location of the merchant system. The user 101 may enter the merchant location carrying the user computing device 110 in a pocket or a bag, in the hands of the user 101, or in any suitable manner. The location of the merchant system may be a store location, a kiosk location, or any suitable physical location of a merchant system. In another example embodiment, a merchant POS operator 102 may be mobile and arrive at a location of the user 101. For example, the merchant system may be a restaurant and the merchant POS device operator 102 may be a delivery person possessing a portable merchant POS device 130.

In certain example embodiments, the payment application 113 may alert the user 101 when the user 101 is in the vicinity of a merchant system that accepts payments. The alert may be provided via a message on the user computing device 110, via an email or a text, haptic response, vibration, or in any suitable manner. In an example embodiment, the alert may be based on the location of the user 101 as determined by a GPS component (not depicted) resident on the user computing device 110. For example, the payment application 113 accesses the GPS data from the GPS component and compare the GPS location to a list of locations of merchant systems that accept payments. For example, the payment application 113 comprises a list or accesses a list maintained by the payment processing system 160 of merchant system locations that accept payments. If a match results from the comparison, then an alert is generated and provided to the user 101. The match may result if the user 101 is within a configured distance of a qualified merchant system location. In an example embodiment, the alerts may be configured to alert in any suitable manner. In an example, the alerts may be combined in commercially dense environments or the alerts may be presented individually. In another example, the alerts may be configured to only alert the user 101 a configured number of times. For example, the alert may be presented three times, but upon a fourth instance, the alert is not presented. The alerts may be presented as a notification with an audible alert, a vibration, a popup alert on the user interface 115 of the user computing device 110, or other suitable alert.

In block 730, the user computing device 110 receives a merchant beacon identifier broadcasted by the merchant beacon device 120. The user computing device 110 recognizes a merchant beacon device 120 via wireless communication at the location of the merchant system. The user computing device 110 may be configured to search for beacons or other wireless signals. In an example embodiment, the user computing device 110 and the merchant beacon device 120 establish a Wi-Fi wireless network 140 connection. In other example embodiments, the user computing device 110 and the merchant beacon device 120 establish a Bluetooth, BLE, NFC, or other appropriate network 140 connection. Upon entering the range of the signal of the merchant beacon device 120, the user computing device 110 receives the merchant beacon identifier.

In block 740, the user computing device 110 transmits the received merchant beacon identifier and a user 101 account identifier to the payment processing system 160. In an example embodiment, the user computing device 110 transmits the data received in the merchant beacon identifier along with a user 101 account identifier to the payment processing system 160 over the network 140.

In block 750, the payment processing system 160 receives the merchant beacon identifier and the user 101 account identifier. For example, the payment processing system 160 receives the merchant beacon identifier and the user 101 account identifier over the network 140. The payment processing system 160 may compare the data from the merchant beacon identifier to a database of merchant beacon identifier data and merchant point of sale device identifier data to determine an identity of the merchant system and merchant point of sale device 130 associated with the merchant beacon identifier and/or to verify the authenticity of the beacon.

From block 750, the method 240 proceeds to block 260 in Figure 2.

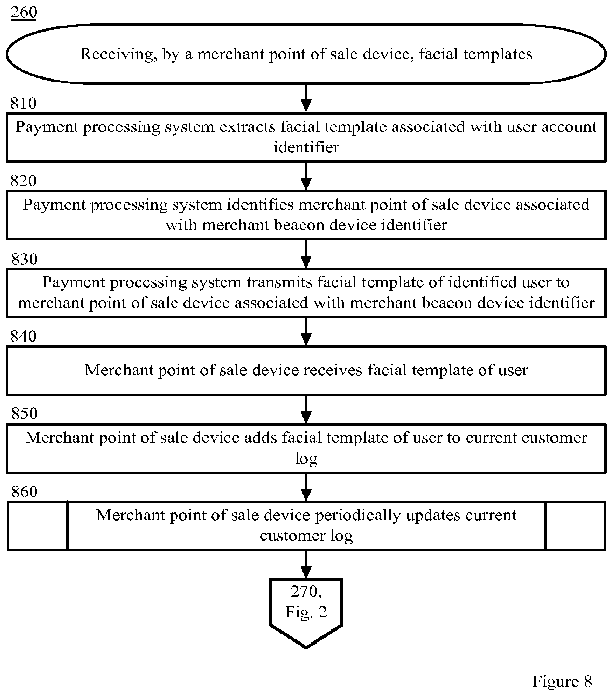

Returning to Figure 2, in block 260, the merchant point of sale device 130 receives a facial template for each user 101 in range of the merchant beacon device 120. The method for receiving, by a merchant point of sale device 130, a facial template for each user 101 in range of the merchant beacon device 120 is described in more detail hereinafter with reference to the method 260 described in Figure 8.

Figure 8 is a block diagram depicting a method 260 for receiving, by a merchant point of sale device 130, facial templates, in accordance with certain example embodiments. The method 260 is described with reference to the components illustrated in Figure 1. In other example embodiments, the merchant point of sale device 130 receives signature templates.

In block 810, the payment processing system 160 extracts a facial template associated with the user 101 account identifier. In an example embodiment, the payment processing system 160 accesses a database comprising stored facial templates of a plurality of users 101 with corresponding user 101 account identifiers for each user 101. For example, this database is stored in the data storage unit 166. In another example embodiment, the payment processing system 160 extracts a signature template associated with the user 101 account identifier.

In block 820, the payment processing system 160 identifies a merchant point of sale device 130 associated with the merchant beacon device 120 identifier. In an example embodiment, the payment processing system 160 recognizes that the merchant beacon device 120 identifier is associated with the payment processing system 160 and a particular merchant point of sale device 130 at the merchant system location. In an example embodiment, the payment processing system 160 recognizes that the merchant beacon identifier is associated with a plurality of merchant point of sale devices 130 installed at a particular merchant location.

In block 830, the payment processing system 160 transmits the facial template of the identified user 101 to the merchant point of sale device 130 associated with the merchant beacon device 120 identifier. In another example, the payment processing system 160 transmits the signature template of the identified user 101 to the merchant point of sale device 130 associated with the merchant beacon device 120 identifier. In certain example embodiments, the payment processing system 160 transmits the facial template or signature template of the identified user 101 to a plurality of merchant point of sale devices 130 associated with the merchant beacon device 120 identifier. In certain example embodiments, the payment processing system 160 receives, in real time, a plurality of transmissions from user computing devices 101 corresponding to a plurality of users 101 present at the merchant system location, each transmission comprising a user 101 account identifier and a retransmitted merchant beacon identifier. In these example embodiments, the payment processing system 160 retrieves, in response to receiving each such transmission, a facial template or signature template associated with the received user 101 account identifier and transmits a facial template or signature template to one or more merchant point of sale devices 130 at the merchant location associated with the merchant beacon identifier.

In block 840, the merchant point of sale device 130 receives the facial template of the user 101. In another example, the merchant point of sale device 130 receives the signature template of the user 101. In another example embodiment, a plurality of merchant point of sale devices 130 receive the facial template or signature template of the user 101. In yet another example embodiment, the merchant point of sale device 130 and/or the plurality of merchant point of sale devices 130 receive one or more additional facial templates or additional signature templates from the payment processing system 160 corresponding to one or more users 101 other than the instant user 101 having user computing devices 110 in network 140 connection to a merchant beacon device 120 according to the method previously described herein. For example, the one or more additional facial templates or signature templates are received in real time from the payment processing system 160 as additional users 101 other than the instant user 101 establish network 140 connections between their user computing devices 110 and one or more merchant beacon devices 120. For example, the one or more merchant point of sale devices 130 may receive one or more additional facial templates or signature templates corresponding to one or more additional users 101 at a time before, at the same time, or after the time at which the merchant point of sale device 130 receives the facial template or signature template of the instant user 101.

In block 850, the merchant point of sale device 130 adds the facial template of the user 101 to a current customer log. In another example, the merchant point of sale device 130 adds the signature template of the user 101 to a current customer log. In an example embodiment, the current customer log is accessible by the merchant point of sale device 130 and by the payment processing system 160. In another example embodiment, the current customer log is additionally accessible by a computing device of the merchant system. In an example embodiment, the payment processing system 160 comprises and maintains the current customer log, which the merchant point of sale device 130 may access via the network 140. In another example embodiment, the merchant system and/or merchant point of sale device 130 comprises and maintains the current customer log, which is accessible to the payment processing system 160 by communicating with the user computing device 110 via the network 140.

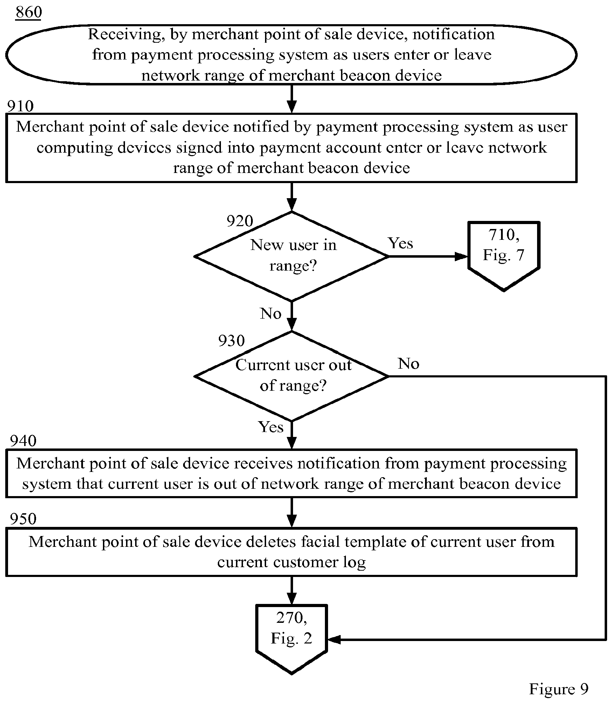

In block 860, the merchant point of sale device 130 periodically updates the current customer log. The method for receiving, by a merchant point of sale device 130, notification from a payment processing system 160 as users 101 enter or leave a network range of a merchant beacon device 120 is described in more detail hereinafter with reference to the method 860 described in Figure 9.

Figure 9 is a block diagram depicting a method 860 for receiving, by a merchant point of sale device 130, notification from a payment processing system 160 as users 101 enter or leave a network range of a merchant beacon device 120, in accordance with certain example embodiments. The method 860 is described with reference to the components illustrated in Figure 1.

In block 910, the merchant point of sale device 130 is notified by the payment processing system 160 as user computing devices 110 signed into a payment account enter or leave a network range of the merchant beacon device 120. For example, as previously discussed, when a user 101 carrying a user computing device 110 enters a threshold distance from a merchant beacon device 120, the merchant beacon device 120 or the user computing device 110 of the user 101 are able to detect the other device and establish a wireless network 140 connection between the two devices at the merchant system location. In this example, the merchant beacon device 120 transmits the merchant beacon identifier corresponding to the merchant beacon device 120 over the wireless network 140 to the user computing device 110. For example, the merchant beacon device 120 transmits the merchant beacon identifier to the user computing device 110 via a Wi-Fi, Bluetooth, BLE, or NFC wireless communication network 140. In this example, the user computing device 110 retransmits the received merchant beacon identifier to the payment processing system 160 along with a user 101 account identifier identifying the user 101.

In block 920, the merchant point of sale device 130 determines whether a new user 101 is in range of the merchant beacon device 120. For example, if the payment processing system 160 receives a new user 101 account identifier in addition to the same merchant beacon identifier, the payment processing system 160 may determine that a new user 101 is in range of the merchant beacon device 120. In this example, the payment processing system 160 may infer that the new user 101 has entered the merchant location based on receipt of the new user 101 account identifier. In another example, if the payment processing system 160 does not receive any new user 101 account identifiers along with the same merchant beacon identifier within a threshold length of time, the payment processing system 160 may determine that no new users 101 have entered the network 140 range of the merchant beacon device 120.

If a new user 101 is in range of the merchant beacon device 120, the method 860 proceeds to block 830 in Figure 8. For example, the payment processing system 160 receives a new user 101 account identifier in addition to the same merchant beacon identifier. In this example, the payment processing system 160 infers that the new user 101 has entered the merchant location based on receipt of the new user 101 account identifier and the same merchant beacon identifier as previously received from the first user 101.

Returning to Figure 8, in block 810, the payment processing system 160 extracts a facial template associated with the new user 101 account identifier. In another example, the payment processing system 160 extracts a signature template associated with the new user 101 account identifier. In an example embodiment, the payment processing system 160 transmits the facial template or signature template to the appropriate one or more merchant point of sale devices 130 in addition to the new user's 101 facial template or signature template to the current customer log.

Returning to Figure 9, in block 920, if a new user 101 is not in range of the merchant beacon device 120, the method 860 proceeds to block 930. For example, the payment processing system 160 does not receive any new user 101 account identifiers along with the same merchant beacon identifier within a threshold length of time and determines that new users 101 have not entered the network 140 range of the merchant beacon device 120.

In block 930, the merchant point of sale device 130 determines whether a current user 101 has moved out of range of the merchant beacon device 120. In an example embodiment, the user computing device 110 continues to receive the merchant beacon identifier from the merchant beacon device 120 and retransmit the merchant beacon identifier along with the user 101 account identifier to the payment processing system 160. In this example embodiment, the user computing device 110 may periodically transmit information comprising the merchant beacon identifier and user 101 account identifier to the payment processing system 160 as long as the user computing device 110 maintains the wireless network 140 connection with the merchant beacon device 120. For example, the user computing device 110 may transmit this information to the payment processing system 160 at every five seconds. In this example embodiment, if the payment processing system 160 ceases to receive the information from the user computing device for a predefined number of intervals, the payment processing system 160 may determine that the corresponding user 101 has moved out of range of the merchant beacon device. In this example embodiment, if the payment processing system 160 continues to receive the information transmitted by the user computing device 110 at the expected intervals, the payment processing system 160 determines that the user 101 is still in network 140 range of the merchant beacon device 120.

If the payment processing system 160 does not detect that a current user 101 has moved out of range of the merchant beacon device 120, the method 860 proceeds to block 260 in Figure 2. For example, the payment processing system 160 continues to receive the merchant beacon identifier and user 101 account identifier transmitted by the user computing device 110 at the expected intervals and determines that the user 101 is still in network 140 range of the merchant beacon device 120.

Returning to block 260, in Figure 2, the merchant point of sale device 130 receives facial templates.

Returning to Figure 9, in block 930, if a current user 101 has moved out of range of the merchant beacon device 120, the method 860 proceeds to block 940.

In block 940, the merchant point of sale device 130 receives a notification from the payment processing system 160 that a current user 101 is out of network range of the merchant beacon device 120. For example, the merchant point of sale device 130 receives the user 101 account identifier associated with the current user 101 that is out of network range, accesses the current customer log, and finds an entry corresponding to the current user 101. For example, the current customer log is maintained by the payment processing system 160 and the merchant point of sale device 130 accesses the current customer log over the network 140 by communicating with the payment processing system 160.

In block 950, the merchant point of sale device 130 deletes the facial template of the current user 101 from the current customer log. In another example, the merchant point of sale device 130 deletes the signature template of the current user 101 from the current customer log. For example, the current customer log comprises a table and the merchant point of sale device 130 deletes or requests the deletion of an entry or row corresponding to data associated with the current user 101 comprising the facial template or signature template of the user 101 for which the merchant point of sale device 130 received the notification. In this example, the merchant point of sale device 130 also deletes the additional facial templates and/or additional signature templates associated with the user 101 facial or signature template that were received from the payment processing system 160.

From block 950, the method 860 proceeds to block 260, in Figure 2.

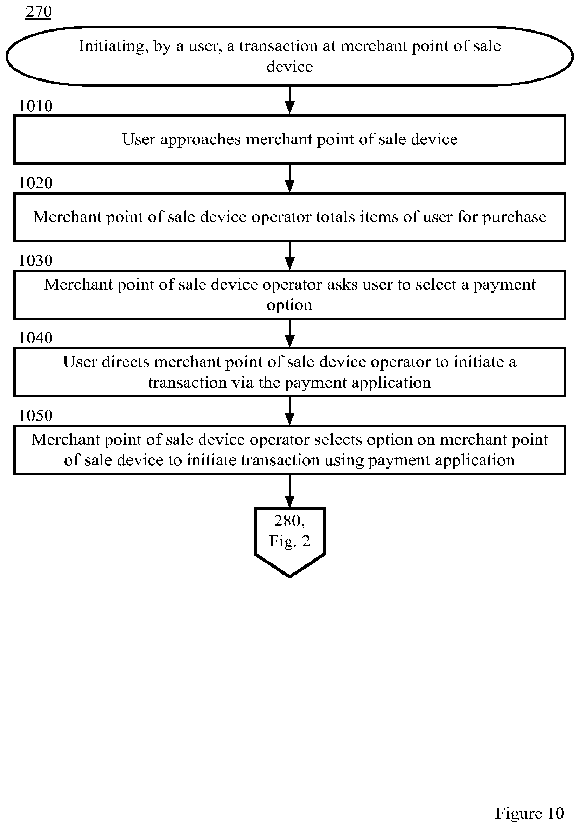

Returning to Figure 2, in block 270, the user 101 initiates a transaction at the merchant point of sale device 130. The method for initiating, by a user 101, a transaction at a merchant point of sale device 130 is described in more detail hereinafter with reference to the method 270 described in Figure 10.

Figure 10 is a block diagram depicting a method 270 for initiating, by a user 101, a transaction at a merchant point of sale device 130, in accordance with certain example embodiments. The method 270 is described with reference to the components illustrated in Figure 1.

In block 1010, the user 101 approaches the merchant point of sale device 130. In an example embodiment, at a time prior to approaching the merchant POS device 130, the user 101 browses the merchant system location and selects one or more items to purchase. In this example embodiment, the user 101 may collect the one or more items and carry, or otherwise transport via physical basket or shopping cart, the one or more items to the merchant POS device 130. In another example embodiment, the merchant POS device 130 approaches the user 101. For example, the merchant POS device 130 comprises a mobile device and the merchant POS device 130 operator approaches the user 101 with the merchant POS device 130. For example, the merchant system comprises a delivery service.

In block 1020, the merchant point of sale device 130 operator 102 totals the items of the user 101 for purchase. In an example embodiment, the merchant POS device operator 102 scans barcodes attached to the one or more items or otherwise enters descriptions and prices associated with the one or more items into the merchant POS device 130. In an example embodiment, after scanning or manually entering the items into the merchant POS device 130, the merchant POS device operator 102 actuates an object on the user interface 135 of the merchant POS device 130 to order the merchant POS device 130 to total the items. In an example embodiment, the merchant POS device 130 displays, via the user interface 135, the total to the user 101.

In block 1030, the merchant point of sale device 130 operator asks the user 101 to select a payment option. In an example embodiment, the merchant POS device 130 displays one or more payment options that the user 101 may select to use in a transaction. Example payment options may comprise payment via a payment application 113 associated with the payment processing system 160, payment by cash, payment by check, payment by credit card, payment by debit card, and/or any other means of payment that the merchant system can or is willing to accept for payment from the user 101. In an example embodiment, the one or more payment options are displayed as objects on the user interface 135 and are selectable by the merchant POS device operator 102 in response to the user 101 directing the merchant POS device 102 operator to make a selection.

In block 1040, the user 101 directs the merchant point of sale device operator 102 to initiate a transaction with the payment application 113. In an example embodiment, in response to receiving a verbal request from the user 101 to select the payment application 113 as a payment option, the merchant POS device operator 102 actuates an object on the user interface 135 of the merchant POS device 130 corresponding to the payment application 113 payment option.

In block 1050, the merchant point of sale device operator 102 selects an option on the merchant point of sale device 130 to initiate a transaction using the payment application 113. In an example embodiment, the merchant POS device 130 displays a confirmation screen after the merchant POS device operator 102 selects an option to initiate a transaction using the payment application 113. An example confirmation screen may display information summarizing the potential transaction and comprising one or more of a transaction total, a description of the one or more items being purchased by the user 101, and a indication that the user 101 selected the payment application 113 as the method of payment for the transaction. An example confirmation screen may further display options to confirm the transaction or cancel the transaction. In an example embodiment, the user 101 reviews the confirmation screen, determines that the information displayed on the confirmation screen is correct, determines to continue with the transaction, and directs the merchant POS device operator 102 to select the option to confirm the transaction via the user interface 135.

In another example embodiment, the user 101 decides to abandon the transaction because the information is incorrect or because the user 101 changed his mind and decided not to purchase the items. In yet another example embodiment, the confirmation screen further comprises an option to edit the transaction details. In this example embodiment, the merchant POS device operator 102, upon direction of the user 101, may select the option to edit the transaction details and may then edit, add, or delete one or more of the items in the transaction or edit payment details or payment methods for the transaction.

From block 1050, the method 270 proceeds to block 280 in Figure 2.

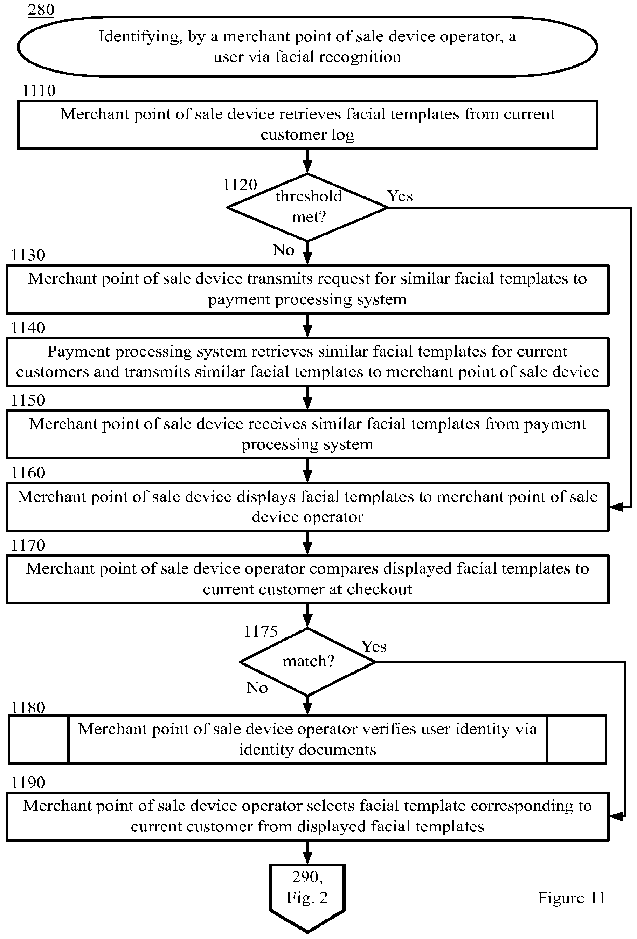

Returning to Figure 2, in block 280, the merchant point of sale device 130 operator identifies the user 101 via facial recognition. The method for identifying, by a merchant point of sale device 130 operator, a user 101 via facial recognition is described in more detail hereinafter with reference to the method 280 described in Figure 11. In other example embodiments, the merchant point of sale device 130 operator identifies the user 101 via signature comparison.

Figure 11 is a block diagram depicting a method 280 for identifying, by a merchant point of sale device 130 operator, a user 101 via facial recognition, in accordance with certain example embodiments. The method 280 is described with reference to the components illustrated in Figure 1.

In block 1110, the merchant point of sale device 130 retrieves facial templates from the current customer log. For example, the current customer log comprises facial templates received from the payment processing system 160 corresponding to all current users 101 whose associated user computing devices 110 are located within a network distance of a merchant beacon device 120. In an example embodiment, the merchant point of sale device 130 transmits, via the network 140, a request to the payment processing system 160 for facial images corresponding to the retrieved facial templates. In this example embodiment, the payment processing system 160 transmits, via the network 140, one or more facial images corresponding to the one or more facial templates in response to receiving the request for the one or more facial images from the merchant point of sale device 130. In another example embodiment, the merchant point of sale device 130 retrieves signature templates from the current customer log. In an example embodiment, any facial images already available on the merchant POS device 130 do not need to be re-sent by the payment processing system 160. For example, the merchant POS device 130 only requests images that the merchant POS device 130 does not have from the payment processing system 160. For example, the merchant POS device comprises a cache of images and the merchant POS device 130 deletes images associated with a user 101 account from the cache when the merchant POS device 130 receives notification that the user computing device 110 associated with the user 101 is out of range of the merchant beacon device 120 and/or has left the merchant location.

In block 1120, the merchant point of sale device 130 determines whether the number of facial templates retrieved from the current customer log meets a predefined threshold. For example, the predefined threshold may comprise ten facial templates, wherein the predefined threshold is met if the merchant point of sale device 130 extracts ten or more facial templates from the current customer log. In another example, merchant point of sale device 130 determines whether the number of signature templates retrieved from the current customer log meets a predefined threshold.

If the number of facial templates retrieved by the merchant point of sale device 130 from the current customer log exceeds the predefined threshold, the method 270 proceeds to block 1160. Similarly, in another example embodiment, if the number of signature templates retrieved by the merchant point of sale device 130 from the current customer log exceeds the predefined threshold, the method 270 proceeds to block 1160

In block 1160, the merchant point of sale device 130 displays the facial templates to the merchant point of sale device operator. For example, there are ten customers carrying user computing devices 110 that retransmit a merchant beacon device identifier received from the merchant beacon device 120 to the payment processing system 160 over the network 140. In this example, the current customer log comprises facial templates corresponding to each of the ten customers. In this example, the predefined threshold comprises ten facial templates and the predefined threshold is met because the current customer log comprises ten or more facial templates. Because the predefined threshold is met, the merchant point of sale device 130 displays the ten facial templates via the user interface of the merchant point of sale device 130 to the merchant point of sale device operator 102.

In another example embodiment, the merchant point of sale device 130 displays signature templates to the merchant point of sale device operator. For example, there are ten customers carrying user computing devices 110 that retransmit a merchant beacon device identifier received from the merchant beacon device 120 to the payment processing system 160 over the network 140. In this example, the current customer log comprises signature templates corresponding to each of the ten customers. In this example, the predefined threshold comprises ten signature templates and the predefined threshold is met because the current customer log comprises ten or more signature templates. Because the predefined threshold is met, the merchant point of sale device 130 displays the ten signature templates via the user interface of the merchant point of sale device 130 to the merchant point of sale device operator 102.

Returning to block 1120, if the number of facial templates retrieved by the merchant point of sale device 130 from the current customer log does not exceed the predefined threshold, the method 270 proceeds to block 1130. For example, the predefined threshold may comprise ten facial templates, wherein the predefined threshold is met if the merchant point of sale device 130 extracts ten or more facial templates from the current customer log. Similarly, in other example embodiments, if the number of signature templates retrieved by the merchant point of sale device 130 from the current customer log does not exceed the predefined threshold, the method 270 proceeds to block 1130. In an example embodiment, the payment processing system 160 may configure the predefined threshold of facial templates. For example, a higher predefined threshold may result in higher level of security for a transaction because the merchant point of sale operator 102 must identify a customer from a larger pool of images displayed on the merchant point of sale device 130. In this example, a lower predefined threshold may result in lower level of security for a transaction because the merchant point of sale operator 102 identifies a customer from a reduced pool of images displayed on the merchant point of sale device 130. In this example, the payment processing system 160 configures or selects a predefined threshold to attain a desired level of security.

In block 1130, the merchant point of sale device 130 transmits a request for similar facial templates to the payment processing system 160. For example, there are four customers at the merchant system location carrying user computing devices 110 that retransmit a merchant beacon device identifier received from the merchant beacon device 120 to the payment processing system 160 over the network 140. In this example, the current customer log comprises facial templates corresponding to each of the four customers. In this example, the predefined threshold comprises ten facial templates and the predefined threshold is not met because the current customer log comprises only four facial templates. In an example embodiment, the request for similar facial templates comprises a user 101 identifier for each of the user 101 facial templates in the current customer log. In other example embodiments, the merchant point of sale device 130 transmits a request for similar signature templates comprising a user 101 account identifier for each of the user 101 signature templates in the current customer log to the payment processing system 160.

In other example embodiments, the merchant point of sale device 130 does not request similar facial templates from the payment processing system 160, but retrieves one or more additional facial templates stored in a memory of the merchant point of sale device 130, for example, the data storage unit 136.

In block 1140, the payment processing system 160 retrieves similar facial templates for current customers and transmits the similar facial templates to the merchant point of sale device 130. In another example embodiment, the payment processing system 160 retrieves similar signature templates for current customers and transmits the similar signature templates to the merchant point of sale device 130. In an example embodiment, the payment processing system 160 retrieves a certain number of similar facial templates or signature templates such that the sum of the number of facial templates or signature templates in the current customer log and the number of retrieved similar facial templates or received similar signature templates equals the predefined threshold. For example, the predefined threshold may be ten facial templates. In this example, the merchant point of sale device 130 determines that there are four facial templates in the current customer log, determines that the four facial templates are less than the predefined threshold of ten, and transmits a request to the payment processing system 160 for similar facial templates. In this example, the payment processing system 160 receives the request for similar facial templates and extracts six similar facial templates to transmit to the merchant point of sale device 130 so that the total number of facial templates that will be displayed by the merchant point of sale device 130 is ten facial templates. In another example, the predefined threshold may be ten signature templates. In this example, the merchant point of sale device 130 determines that there are four signature templates in the current customer log, determines that the four signature templates are less than the predefined threshold of ten, and transmits a request to the payment processing system 160 for similar signature templates. In this example, the payment processing system 160 receives the request for similar signature templates and extracts six similar signature templates to transmit to the merchant point of sale device 130 so that the total number of signature templates that will be displayed by the merchant point of sale device 130 is ten signature templates.

In an example embodiment, the payment processing system 160 extracts all of the facial templates or signature templates for each of the users 101 in the current customer log and selects a certain number of facial templates or signature templates to transmit to the merchant point of sale device 130. In an example embodiment, the payment processing system 160 randomly selects the certain number of facial templates or signature templates from a pool comprising all similar facial templates or all similar signature templates associated with the users 101 in the current customer log. In another example embodiment, the payment processing system 160 evenly divides the selected facial templates or selected signature templates among the users 101 in the current customer log. For example, there are five users 101 in the current customer log and the payment processing system 160 selects five similar facial templates, each similar facial template associated with a particular user 101 in the current customer log. Other appropriate methods or algorithms may be used to select similar facial templates or similar signature templates associated with the users 101 in the current customer log.

In block 1150, the merchant point of sale device 130 receives the similar facial templates from the payment processing system 160. For example, the merchant point of sale device 130 receives the similar facial templates transmitted by the payment processing system 160 over the network 140. In another example embodiment, the merchant point of sale device 130 receives the similar signature templates transmitted by the payment processing system 160 over the network 140.

In other example embodiments, the merchant point of sale device 130 does not request similar facial templates from the payment processing system 160, but retrieves one or more additional facial templates stored in a memory of the merchant point of sale device 130, for example, the data storage unit 136.

In block 1160, the merchant point of sale device 130 displays the facial templates to the merchant point of sale device 130 operator. In an example embodiment, in which the threshold number of facial templates in the current customer log was met or exceeded, the merchant point of sale device 130 displays only the facial templates in the current customer log. In another example embodiment, in which the threshold number of facial templates in the current customer log was not met, the merchant point of sale device 130 displays the facial templates in the current customer log in addition to similar facial templates associated with one or more users 101 in the current customer log requested and received from the payment processing system 160 over the network 140. In other example embodiments, in which the threshold number of facial templates in the current customer log was not met, the merchant point of sale device 130 displays the facial templates in the current customer log in addition to additional facial templates retrieved from a memory of the merchant point of sale device 130, for example, the data storage unit 136. In an example embodiment, the merchant point of sale device 130 displays the facial templates via the user interface 135 of the merchant point of sale device 130. In an example, the displayed facial templates comprise icons selectable by the operator of the merchant point of sale device 130.

In another example embodiment, the merchant point of sale device 130 displays the signature templates to the merchant point of sale device 130 operator. In an example embodiment, in which the threshold number of signature templates in the current customer log was met or exceeded, the merchant point of sale device 130 displays only the signature templates in the current customer log. In another example embodiment, in which the threshold number of signature templates in the current customer log was not met, the merchant point of sale device 130 displays the signature templates in the current customer log in addition to similar signature templates associated with one or more users 101 in the current customer log requested and received from the payment processing system 160 over the network 140. In an example embodiment, the merchant point of sale device 130 displays the signature templates via the user interface 135 of the merchant point of sale device 130. In an example, the displayed signature templates comprise icons selectable by the operator of the merchant point of sale device 130.

In block 1170, the merchant point of sale device operator 102 compares the displayed facial templates to the current customer at checkout. In an example, the operator of the merchant point of sale device 130 may scroll through or otherwise review all of the displayed facial templates. In an example embodiment, the user 101 compares facial features and/or characteristics of the current user 101 that is initiating a transaction to the facial features of each of the one or more facial templates displayed on the merchant point of sale device 130. In another example embodiment, the merchant point of sale device operator 102 compares the displayed signature templates to a signature of the current customer at checkout. For example, the merchant point of sale device operator 102 requests that the current customer at checkout provide a signature to the merchant point of sale device operator 102. In an example, the current customer submits the signature via the user interface 135 of the merchant point of sale device 130. In another example, the current customer physically signs his signature using a pen and paper on a form provided by the merchant point of sale device operator 102.

In block 1175, the merchant point of sale device 130 operator 102 determines whether there is a match between a particular displayed facial template and the facial profile of the current user 101 at checkout. In another example embodiment, the merchant point of sale device operator 102 determines whether there is a match between a particular displayed signature template and the signature provided by the current user 101 at checkout.

If the merchant point of sale device operator 102 determines that there is a match between a particular facial template displayed on the merchant point of sale device 130 and the facial profile of the current user 101 at checkout, the method 270 proceeds to block 1190. In another example, if the merchant point of sale device operator 102 determines that a match exists between a particular displayed signature template and the signature provided by the current user 101 at checkout, the method 270 proceeds to block 1190.

In block 1190, the merchant point of sale device operator 102 selects the facial template corresponding to the current customer from the displayed facial templates. For example, the operator 102 actuates an object on the user interface 135 of the point of sale device 130 to select the facial template corresponding to the current customer from the displayed facial templates. In another example embodiment, the merchant point of sale device operator 102 selects the signature template corresponding to the current customer from the displayed signature templates. For example, the operator 102 actuates an object on the user interface 135 of the point of sale device 130 to select the signature template corresponding to the current customer from the displayed signature templates.

Returning to block 1175, if the merchant point of sale device operator 102 determines that there is not a match between any of the facial templates displayed on the merchant point of sale device 130 and the facial profile of the current user 101 at checkout, the method 270 proceeds to block 1180. In other example embodiments, if the merchant point of sale device operator 102 determines that there is not a match between any of the signature templates displayed on the merchant point of sale device 130 and the signature provided by the current user 101 at checkout, the method 270 proceeds to block 1180.

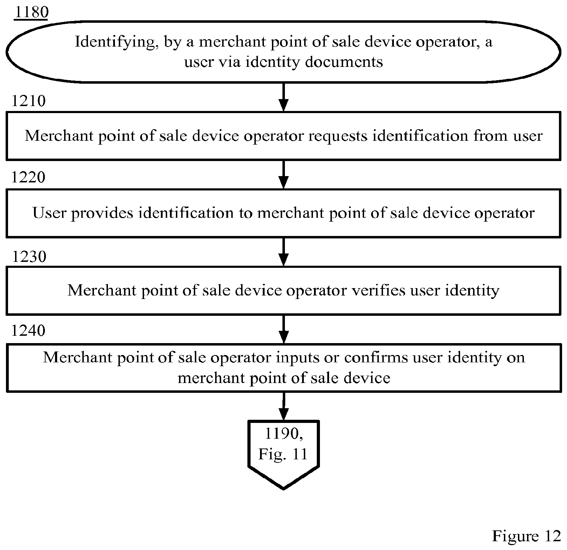

In block 1180, the merchant point of sale device operator 102 verifies the user 101 identity via identity documents. The method for verifying, by a merchant point of sale device operator 102, a user 101 identity via identity documents is described in more detail hereinafter with reference to the method 1180 described in Figure 12.

Figure 12 is a block diagram depicting a method 1180 for identifying, by a merchant point of sale device 130 operator 102, a user 101 via identity documents, in accordance with certain example embodiments. The method 1180 is described with reference to the components illustrated in Figure 1.

In block 1210, the merchant point of sale device operator 102 requests identification from the user 101. For example, the merchant point of sale device operator 102 requests an identity document that identifies the user 101. An example identity document may be government issued or issued by a non-government entity. An example identity document is sufficient to identify the user 101 identity associated with the user 101 account. An example identity document comprises a photo of the user 101. For example, the identity document comprises a driver's license or an identity card.

In block 1220, the user 101 provides identification to the merchant point of sale device operator 102. For example, the user 101 presents a driver's license identifying the user 101 to the merchant point of sale operator 102.

In block 1230, the merchant point of sale device operator 102 verifies the user 101 identity. In an example embodiment, the merchant point of sale device operator 102 compares the name, birthdate, image, or other information on the user 101 identity document against a visual profile of the user 101. In this example, the merchant point of sale device operator 102 compares the visual profile of the user 101 against the identity document of the user 101. For example, the user's 101 identity document indicates that the user 101 is a 20 year old male, weighs 150 pounds, is 5 feet and 4 inches tall, and has brown hair and green eyes and the merchant POS device 130 operator 102 estimates that the user 101 visual profile conforms with the profile described on the identity document presented by the user 101.

In block 1240, the merchant point of sale operator 102 inputs or confirms the user 101 identity on the merchant point of sale device 130. In an example embodiment, the merchant point of sale device operator 102 actuates one or more objects on the user interface 135 of the merchant point of sale device to confirm the identity of the user 101. For example, the merchant point of sale device operator 102 may enter an identity number written on the user 101 identity document into the user interface 135 and/or select an option to confirm the user 101 identity.

From block 1240, the method 1180 returns to block 1190 in Figure 11.

Returning to Figure 11, in block 1190, the merchant point of sale device operator 102 selects the facial template corresponding to the current customer from the displayed facial templates. In an example, the displayed facial template comprises an icon on the user interface 135 of the merchant point of sale device 130 that the operator 102 may select. In an example, in response to the operator 102 selecting the displayed user facial template corresponding to the current customer at checkout, the merchant point of sale device 130 communicates the selected facial template to the payment processing system 160 over the network 140. In an example embodiment, the payment processing system 160 identifies the user 101 account associated with the received facial template or signature template. In an example embodiment, the payment processing system 160 compares the received facial template or signature template selected by the merchant point of sale device 130 operator 102 to the template associated with the user 101 account. For example, the operator 102 must select a true facial template or signature template, not a similar facial template or similar signature template, in order for the payment processing system 160 to allow the transaction to be processed. In an example embodiment, the received facial template or received signature template comprise a template identifier and the true facial template or true signature template associated with the user 101 account also comprises a template identifier. In this example embodiment, the payment processing system 160 determines whether the facial template or signature template comprise the true facial or signature template of the user 101 by comparing the template identifiers of the received template and the true template stored in the user 101 account.

In certain example embodiments, the merchant point of sale device 130 operator selects an incorrect facial template or signature template. For example, the merchant point of sale device 130 operator 102 selects a particular one of the displayed similar facial templates or similar signature templates displayed on the merchant point of sale device 130 that does not comprise the true facial template or signature template associated with the user 101 account. In these example embodiments, the payment processing system 160 receives an indication of the selection by the operator 102 of the similar facial template or similar signature template. For example, the operator 102 must select a true facial template or signature template, not a similar facial template or similar signature template, in order for the payment processing system 160 to allow the transaction to be processed. In an example embodiment, the received facial template or received signature template comprise a template identifier and the true facial template or true signature template associated with the user 101 account also comprises a template identifier. In this example embodiment, the payment processing system 160 determines whether the facial template or signature template comprise the true facial or signature template of the user 101 by comparing the template identifiers of the received template and the true template stored in the user 101 account. In an example embodiment, the payment processing system 160 determines that the selected template does not correspond to the template associated with the user 101 account and is instead a similar template generated by the payment processing system 160. In an example embodiment, the payment processing system 160 cancels the transaction and/or does no further processing of the transaction and transmits a notification to the merchant point of sale device 130 that the transaction cannot be processed. In another example embodiment, the payment processing system 160 transmits a notification that a transaction was attempted to the user computing device 110 associated with the user account.

From block 1190, the method 280 proceeds to block 290 in Figure 2.

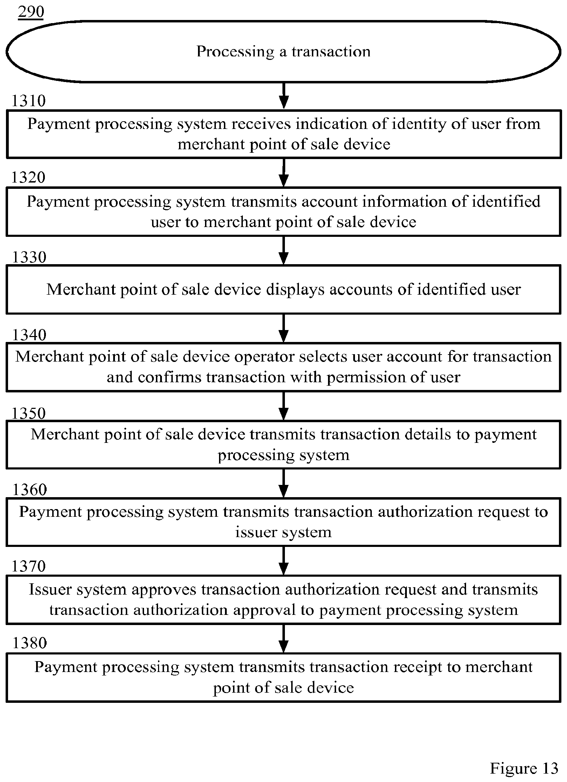

Returning to Figure 2, in block 290, a transaction is processed. The method for processing a transaction is described in more detail hereinafter with reference to the method 290 described in Figure 13.

Figure 13 is a block diagram depicting a method 290 for processing a transaction, in accordance with certain example embodiments. The method 290 is described with reference to the components illustrated in Figure 1.

In block 1310, the payment processing system 160 transmits account information of the identified user 101 to the merchant point of sale device 130. In an example embodiment, the payment processing system 160 identifies the user 101 account associated with the current transaction based on the user 101 account identifier associated with the user 101 facial template selected by the merchant point of sale device operator 102 and received from the merchant point of sale device 130. For example, the user 101 account with the payment processing system 160 comprises payment account information associated with one or more payment accounts of the user 101. An example payment account of the user 101 comprises a credit account, bank account, stored value account, gift card, merchant system charge account, or other relevant user 101 account. In an example embodiment, the merchant POS device 130 does not receive complete payment information for one or more of the user 101 payment accounts. For example, the payment information may be obfuscated or truncated. For example, the merchant POS device 130 may only receive abbreviated payment information sufficient for a user 101 to identify a payment account via the user interface 135.

In block 1320, the merchant point of sale device 130 displays accounts of the identified user 101. In an example embodiment, the merchant POS device 130 does not display complete account information of the user 101 on the user interface 135. For example, for a credit card account, the merchant POS device user interface 135 may display only the name associated with the credit card, last four digits of the credit card number, and the expiration date.

In block 1330, the merchant point of sale device operator 102 selects a user 101 account for transaction and confirms the transaction with permission of the user 101. For example, the user 101 views the account options directly displayed on the user interface 135 or listens to the merchant POS device operator 102 read the user 101 payment account options to the user 101. In an example embodiment, the user 101 selects a payment account option to use in the transaction. For example, the user 101 decides to use a credit card account. In an example embodiment, the user 101 communicates a selection of a payment account for use in the transaction to the merchant POS device operator 102. In an example embodiment, in response to receiving the user's 101 indication of the payment account, the merchant POS device operator 102 selects the payment account indicated by the user 101 on the merchant POS device user interface 135.

In block 1340, the merchant point of sale device 130 transmits transaction details to the payment processing system 160. For example, the merchant POS device 130 transmits transaction details comprising a transaction total, an account identifier of the merchant system, and the selection of the user 101 account payment option. In an example embodiment, the payment processing system 160 receives the transaction details over the network 140. In an example embodiment, the payment processing system 160 extracts payment account information from the user 101 account corresponding to the received selection of the user 101 payment account.

In block 1350, the payment processing system 160 transmits a transaction authorization request to an issuer system 150. In an example embodiment, the payment processing system 160 generates a transaction authorization request comprising user 101 payment account information, merchant system payment account information, and a total amount of the transaction. In an example embodiment, the issuer system 150 receives the transaction authorization request from the payment processing system 160 via the network 140.

In block 1360, the issuer system 150 approves the transaction authorization request and transmits a transaction authorization approval to the payment processing system 160. In an example embodiment, the issuer system 150 subtracts the user's 101 current account balance from the user's 101 credit limit associated with the user's 101 credit account. In an example embodiment, if the different between the credit limit and the credit balance is a positive number greater than the total amount of the transaction, the issuer system 150 approves the transaction authorization. For example, the user 101 will not exceed his credit limit if the transaction were to be approved, therefore the issuer system 150 approves the transaction authorization request. In an example embodiment, the payment processing system 160 receives the transaction authorization approval from the issuer system 150. In another example embodiment, the payment processing system 160 receives a denial of the transaction authorization request in response to the issuer system 150 declining the transaction authorization request. In an example embodiment, if the issuer system 150 approves the transaction authorization request, the issuer system 150 credits the merchant system account and adds a charge to the user 101 credit account statement, bank account statement, or other appropriate statement.

In block 1370, the payment processing system 160 transmits a transaction receipt to the merchant point of sale device 130. For example, the payment processing system 160 transmits a confirmation of the approval of the transaction or a notice of a declined transaction to the merchant POS device 130 over the network 140. In an example embodiment, the merchant POS device 130 prints a receipt comprising a summary of a successful or unsuccessful transaction via a printer device that is a component of or otherwise communicatively coupled to the merchant POS device 130. In another example embodiment, the payment processing system 160 may transmit a transaction receipt to the user computing device 110 to be displayed on the user computing device. In yet another example embodiment, the merchant POS device 130 transmits a transaction receipt to the user computing device 110 to be displayed on the user computing device.

### Other Example Embodiments

Figure 14 depicts a computing machine 2000 and a module 2050 in accordance with certain example embodiments. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to some embodiments, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The example embodiments described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

The example systems, methods, and acts described in the embodiments presented previously are illustrative, and, in alternative embodiments, certain acts can be performed in a different order, in parallel with one another, omitted entirely, and/or combined between different example embodiments, and/or certain additional acts can be performed.

Although specific embodiments have been described above in detail, the description is merely for purposes of illustration. It should be appreciated, therefore, that many aspects described above are not intended as required or essential elements unless explicitly stated otherwise. Modifications of, and equivalent components or acts corresponding to, the disclosed aspects of the example embodiments, in addition to those described above, can be made by a person of ordinary skill in the art, having the benefit of the present disclosure.

## Claims

1. A computer-implemented method (200) to identify users, comprising:
retrieving (260), by a point of sale computing device (130), one or more stored image templates associated with customers currently located at or near a merchant system location, wherein the one or more stored image templates include an image template associated with a current customer (101) at a physical location for the point of sale computing device (130), wherein the one or more retrieved stored image templates correspond to all current customers with an associated user computing device (110) located within a network distance of a merchant beacon device (120) and which transmits an account identifier of a user and a merchant beacon identifier to a payment processing system (160);
determining (280, 1120), by the point of sale computing device (130), whether the one or more stored image templates meet a predefined threshold number of templates;
if the one or more stored image templates do not meet the predefined threshold number of templates, requesting (280, 1130), by the point of sale computing device (130), and from the payment processing system (160), one or more additional image templates similar to one or more of the retrieved stored image templates;
receiving (280, 1150), by the point of sale computing device (130) and from the payment processing system (160), the requested one or more additional image templates, the one or more additional image templates selected, by the payment processing system (160) and from one or more images in an image database, as similar image templates to one or more of the retrieved stored image templates based on a comparison of one or more features described by one or more of the retrieved stored image templates and corresponding features of the one or more images in the image database;
displaying (280, 1160), by the point of sale computing device (130) and to an operator (102) of the point of sale computing device (130), one or more of the retrieved stored image templates and one or more of the additional image templates;
receiving (280, 1190), by the point of sale computing device (130) and from the operator (102) of the point of sale computing device (130), an input of a selection of a particular one of the displayed image templates, the selection indicating that the operator (102) has determined a match between the current customer (101) and the particular one of the displayed image templates; and
transmitting (280, 1190), by the point of sale computing device (130) and to the payment processing system (160), an indication of the selection of the particular one of the displayed image templates.

2. The method of claim 1, further comprising:
receiving (290, 1310), by the point of sale computing device (130) and from the payment processing system (160), payment account information comprising one or more payment options associated with a digital wallet account of the current customer (101) associated with the selected particular one of the image templates;
displaying (290, 1320), by the point of sale computing device (130), the payment account information;
receiving (290, 1330), by the point of sale computing device (130), an input of a selection of a particular payment option; and
transmitting (290, 1340), by the point of sale computing device (130) to the payment processing system (160), an indication of a selection of a particular payment option by the operator, wherein the payment processing system (160) process a transaction using payment account information associated with the selected particular payment option.

3. The method of claim 1, wherein (i) the one or more additional templates are generated by the payment processing system (160) based on the stored one or more templates, and/or
wherein (ii) the image templates comprise facial image templates, and wherein the input of the selection comprises a selection by the point of sale computing device operator of the particular image template in response to comparing each of the displayed image templates to a facial profile of the current customer, and/or
wherein (iii) the image templates comprise signature image templates, and wherein the input of the selection comprises a selection by the point of sale computing device operator of the particular image template based on comparing a signature provided by the customer against each of the displayed image templates.

4. A computer-implemented method to identify users, comprising:
receiving (250, 750), by a payment processing system (160) and from a user computing device (110), an account identifier of a user and a merchant beacon identifier, wherein the user computing device (110) receives (730) the merchant beacon identifier via a network connection with a merchant beacon device (120) located at a physical location of a merchant computing system (120, 130);
retrieving (260, 810), by the payment processing system (160), an image template associated with the user based on the account identifier of the user;
identifying (260, 820), by the payment processing system (160), a merchant system point of sale computing device (130) associated with the merchant beacon identifier;
adding (260, 850), by the payment processing system (160), the image template of the user to a current customer log comprising image templates of users currently at the location of the merchant computing system (120, 130);
transmitting (260, 830), by the payment processing system and to the merchant point of sale computing device, the current customer log;
wherein the method further comprises:
receiving (280, 1130), by the payment processing system (160) and from the merchant point of sale computing device (130), a request for additional image templates, wherein the merchant point of sale computing device (130) transmits the request for additional image templates in response to determining (1120) that the current customer log comprises a number of image templates less than a predefined threshold;
retrieving (280, 1140), by the payment processing system (160), additional image templates based on the current customers listed in the current customer log;
transmitting (280, 1150), by the payment processing system (160), the additional image templates to the merchant point of sale computing device (130) for display along with the image templates in the current customer log; and
receiving (280, 1190, 290, 1310), by the payment processing system (160), an indication of a selection of a particular image template from the displayed image templates.

5. The method of claim 4, further comprising:
determining, by the payment processing system (160), that the user computing device (110) no longer maintains a network connection with the merchant beacon device (120);
removing, by the payment processing system (160), the facial template of the user and associated merchant system location from the current customer log to generate an updated current customer log; and
transmitting, by the payment processing system (160) and to the merchant point of sale computing device (130), the updated current customer log.

6. The method of claim 5, wherein the payment processing system (160) determines that the user computing device (130) no longer maintains the network connection with the merchant beacon device (120) if a subsequent transmission of the user account identifier and the merchant beacon identifier is not received within a threshold amount of time from the user computing device (110).

7. The method of claim 4, further comprising:
identifying, by the payment processing system (160), a user account based on the received particular image template;
determining, by the payment processing system (160), that the received particular image template matches the image template associated with the user account;
transmitting (290, 1320), by the payment processing system (160) and to the merchant point of sale computing device (130), payment information comprising one or more payment account data associated with the user account;
receiving (290, 1350), by the payment processing system (160) and from the merchant point of sale computing device (130), an indication of a selection of a particular payment account data and transaction data;
generating, by the payment processing system (160), a transaction authorization request comprising the transaction total, the merchant account identifier, and the particular payment account information;
transmitting (290, 1360), by the payment processing system (160), the transaction authorization request to an issuer system (150) associated with the particular payment account;
receiving (290, 1370), by the payment processing system (160) and from the issuer system (150), data comprising an approval of the transaction authorization request; and
transmitting (290, 1380), by the payment processing system (160) and to the merchant point of sale computing device (130) for display on the point of sale device, a receipt comprising a summary of the transaction.

8. The method of claim 4, further comprising, at a time before retrieving (280, 1140) the additional image templates based on the current customers listed in the current customer log, generating (230), by the payment processing system (160), the additional image templates,
wherein, as an option, generating (230) the additional image templates comprises retrieving the additional image templates from an image database based on a similarity to image templates associated with the current customers (101) and storing the retrieved additional image templates in a memory of the payment processing system (160).

9. A computer program product, comprising:
a non-transitory computer-readable medium having computer-readable program instructions embodied thereon that when executed by a computer cause the computer to perform the method of any of claims 1 to 3.

10. The computer program product of claim 9, wherein the image templates comprise facial image templates and wherein an operator selects the particular image template in response to comparing each of the displayed image templates to a facial profile of the current customer (101).

11. A computer program product, comprising:
a non-transitory computer-readable medium having computer-readable program instructions embodied thereon that when executed by a computer cause the computer to perform the method of any of claims 4 to 8.

12. A computing device (130) to identify users, comprising:
a storage device (136); and
a processor communicatively coupled to the storage device (136), wherein the processor executes application code instructions that are stored in the storage device to cause the computing device to:
retrieve (260) one or more stored image templates associated with customers currently located at or near a merchant system location, wherein the one or more stored image templates include an image template associated with a current customer (101) at a physical location for the point of sale computing device (130), wherein the one or more retrieved stored image templates corresponding to all current customers with an associated user computing device located within a network distance of a merchant beacon device and which transmits an account identifier of a user and a merchant beacon identifier to a payment processing system (160);
determine (280, 1120) whether the one or more stored image templates meet a predefined threshold number of templates;
if the one or more stored image templates do not meet the predefined threshold number of templates, request (280, 1130), from a payment processing system (160), one or more additional image templates similar to one or more of the retrieved stored image templates;
receive (280, 1150), from the payment processing system (160), the requested one or more additional image templates, the one or more additional image templates selected, by the payment processing system (160) and from one or more images in an image database, as similar image templates to one or more of the retrieved stored image templates based on a comparison of one or more features described by one or more of the retrieved stored image templates and corresponding features of the one or more images in the image database;
display (280, 1160), to an operator (102) of the point of sale computing device (130), one or more of the retrieved stored image templates and one or more of the additional image templates;
receive (280, 1190), from the operator (102) of the point of sale computing device (130), an input of a selection of a particular one of the displayed image templates, the selection indicating that the operator (102) has determined a match between the current customer (101) and the particular one of the displayed image templates; and
transmit (280, 1190) to the payment processing system (160) an indication of the selection of the particular one of the displayed image templates.

13. A system (160) to identify users, comprising:
a storage device (166); and
a processor communicatively coupled to the storage device (166), wherein the processor executes application code instructions that are stored in the storage device to cause the system to:
receive (250, 750), from a user computing device (110), an account identifier of a user and a merchant beacon identifier, wherein the user computing device (110) receives (730) the merchant beacon identifier via a network connection with a merchant beacon device (120) located at a physical location of a merchant computing system (120, 130);
retrieve (260, 810) an image template associated with the user based on the account identifier of the user;
identify (260, 820) a merchant system point of sale computing device (130) associated with the merchant beacon identifier;
add (260, 850) the image template of the user to a current customer log comprising image templates of users currently at the location of the merchant computing system (120, 130); and
transmit (260, 830) to the merchant point of sale computing device (130) the current customer log;
wherein the processor further executes application code instructions that are stored in the storage device to cause the system to:
receive (280, 1130), by the payment processing system (160) and from the merchant point of sale computing device (130), a request for additional image templates, wherein the merchant point of sale computing device (130) transmits the request for additional image templates in response to determining (1120) that the current customer log comprises a number of image templates less than a predefined threshold;
retrieve (280, 1140), by the payment processing system (160), additional image templates based on the current customers listed in the current customer log;
transmit (280, 1150), by the payment processing system (160), the additional image templates to the merchant point of sale computing device (130) for display along with the image templates in the current customer log; and
receive (280, 1190, 290, 1310), by the payment processing system (160), an indication of a selection of a particular image template from the displayed image templates.

## Patentansprüche

1. Computerimplementiertes Verfahren (200) zum Identifizieren von Benutzern, umfassend:
Abrufen (260), durch eine Verkaufsstellenrechenvorrichtung (130), von einer oder mehreren gespeicherten Bildvorlagen, die Kunden zugeordnet sind, die sich aktuell an oder nahe einem Händlersystemstandort befinden, wobei die eine oder die mehreren gespeicherten Bildvorlagen eine Bildvorlage beinhalten, die einem aktuellen Kunden (101) an einem physischen Standort für die Verkaufsstellenrechenvorrichtung (130) zugeordnet ist, wobei die eine oder die mehreren abgerufenen gespeicherten Bildvorlagen allen aktuellen Kunden entsprechen, wobei sich eine zugeordnete Benutzerrechenvorrichtung (110) innerhalb einer Netzwerkentfernung von einer Händler-Beacon-Vorrichtung (120) befindet und die eine Kontokennung eines Benutzers und eine Händler-Beacon-Kennung an ein Zahlungsverarbeitungssystem (160) überträgt;
Bestimmen (280, 1120), durch die Verkaufsstellenrechenvorrichtung (130), ob die eine oder die mehreren gespeicherten Bildvorlagen eine vordefinierte Schwellenanzahl an Vorlagen erfüllen;
wenn die eine oder die mehreren gespeicherten Bildvorlagen die vordefinierte Schwellenwertanzahl an Vorlagen nicht erfüllen, Anfordern (280, 1130), durch die Verkaufsstellenrechenvorrichtung (130), und von dem Zahlungsverarbeitungssystem (160), von einer oder mehreren zusätzlichen Bildvorlagen ähnlich einer oder mehreren der abgerufenen gespeicherten Bildvorlagen;
Empfangen (280, 1150), durch die Verkaufsstellenrechenvorrichtung (130) und von dem Zahlungsverarbeitungssystem (160), der angeforderten einen oder mehreren zusätzlichen Bildvorlagen, wobei die eine oder die mehreren zusätzlichen Bildvorlagen durch das Zahlungsverarbeitungssystem (160) und aus einem oder mehreren Bildern in einer Bilddatenbank ausgewählt werden, als ähnliche Bildvorlagen zu einer oder mehreren der abgerufenen gespeicherten Bildvorlagen basierend auf einem Vergleich von einem oder mehreren Merkmalen, die durch eine oder mehrere der abgerufenen gespeicherten Bildvorlagen beschrieben werden, und entsprechenden Merkmalen des einen oder der mehreren Bilder in der Bilddatenbank;
Anzeigen (280, 1160), durch die Verkaufsstellenrechenvorrichtung (130) und an einen Bediener (102) der Verkaufsstellenrechenvorrichtung (130), von einer oder mehreren der abgerufenen gespeicherten Bildvorlagen und einer oder mehreren der zusätzliche Bildvorlagen;
Empfangen (280, 1190), durch die Verkaufsstellenrechenvorrichtung (130) und von dem Bediener (102) der Verkaufsstellenrechenvorrichtung (130), einer Eingabe einer Auswahl einer bestimmten der angezeigten Bildvorlagen, wobei die Auswahl angibt, dass der Bediener (102) eine Übereinstimmung zwischen dem aktuellen Kunden (101) und der bestimmten einen der angezeigten Bildvorlagen bestimmt hat; und
Übertragen (280, 1190), durch die Verkaufsstellenrechenvorrichtung (130) und an das Zahlungsverarbeitungssystem (160), einer Angabe der Auswahl der bestimmten einen der angezeigten Bildvorlagen.

2. Verfahren nach Anspruch 1, ferner umfassend:
Empfangen (290, 1310), durch die Verkaufsstellenrechenvorrichtung (130) und von dem Zahlungsverarbeitungssystem (160), von Zahlungskontoinformationen, die eine oder mehrere Zahlungsoptionen umfassen, die einem digitalen Brieftaschenkonto des aktuellen Kunden (101) zugeordnet sind, welcher der ausgewählten bestimmten einen der Bildvorlagen zugeordnet ist;
Anzeigen (290, 1320), durch die Verkaufsstellenrechenvorrichtung (130), der Zahlungskontoinformationen;
Empfangen (290, 1330), durch die Verkaufsstellenrechenvorrichtung (130), einer Eingabe einer Auswahl einer bestimmten Zahlungsoption; und
Übertragen (290, 1340), durch die Verkaufsstellenrechenvorrichtung (130) an das Zahlungsverarbeitungssystem (160), einer Angabe einer Auswahl einer bestimmten Zahlungsoption durch den Bediener, wobei das Zahlungsverarbeitungssystem (160) eine Transaktion unter Verwendung von Zahlungskontoinformationen verarbeitet, die der ausgewählten bestimmten Zahlungsoption zugeordnet sind.

3. Verfahren nach Anspruch 1, wobei (i) die eine oder die mehreren zusätzlichen Vorlagen durch das Zahlungsverarbeitungssystem (160) basierend auf der gespeicherten einen oder mehreren Vorlagen erzeugt werden, und/oder
wobei (ii) die Bildvorlagen Gesichtsbildvorlagen umfassen, und wobei die Eingabe der Auswahl eine Auswahl der bestimmten Bildvorlage durch den Bediener der Verkaufsstellenrechenvorrichtung als Reaktion auf das Vergleichen von jeder der angezeigten Bildvorlagen mit einem Gesichtsprofil des aktuellen Kunden umfasst, und/oder
wobei (iii) die Bildvorlagen Signaturbildvorlagen umfassen, und wobei die Eingabe der Auswahl eine Auswahl der bestimmten Bildvorlage durch den Bediener der Verkaufsstellenrechenvorrichtung basierend auf dem Vergleichen einer Signatur, die von dem Kunden bereitgestellt wird, mit jeder der angezeigten Bildvorlagen umfasst.

4. Computerimplementiertes Verfahren zum Identifizieren von Benutzern, umfassend:
Empfangen (250, 750), durch ein Zahlungsverarbeitungssystem (160) und von einer Benutzerrechenvorrichtung (110), einer Kontokennung eines Benutzers und einer Händler-Beacon-Kennung, wobei die Benutzerrechenvorrichtung (110) die Händler-Beacon-Kennung über eine Netzwerkverbindung mit einer Händler-Beacon-Vorrichtung (120) empfängt (730), die sich an einem physischen Standort eines Händlerrechensystems (120, 130) befindet;
Abrufen (260, 810), durch das Zahlungsverarbeitungssystem (160), einer Bildvorlage, die dem Benutzer zugeordnet ist, basierend auf der Kontokennung des Benutzers;
Identifizieren (260, 820), durch das Zahlungsverarbeitungssystem (160), einer Händlersystemverkaufsstellenrechenvorrichtung (130), die der Händler-Beacon-Kennung zugeordnet ist;
Hinzufügen (260, 850), durch das Zahlungsverarbeitungssystem (160), der Bildvorlage des Benutzers zu einem aktuellen Kundenprotokoll, das Bildvorlagen von Benutzern umfasst, die sich aktuell an dem Standort des Händlerrechensystems (120, 130) befinden;
Übertragen (260, 830), durch das Zahlungsverarbeitungssystem und an die Händlerverkaufsstellenrechenvorrichtung, des aktuellen Kundenprotokolls;
wobei das Verfahren ferner Folgendes umfasst:
Empfangen (280, 1130), durch das Zahlungsverarbeitungssystem (160) und von der Händlerverkaufsstellenrechenvorrichtung (130), einer Anforderung von zusätzlichen Bildvorlagen, wobei die Händlerverkaufsstellenrechenvorrichtung (130) die Anforderung von zusätzlichen Bildvorlagen als Reaktion auf das Bestimmen (1120) überträgt, dass das aktuelle Kundenprotokoll eine Anzahl an Bildvorlagen umfasst, die kleiner als ein vordefinierter Schwellenwert ist;
Abrufen (280, 1140), durch das Zahlungsverarbeitungssystem (160), von zusätzlichen Bildvorlagen basierend auf den aktuellen Kunden, die in dem aktuellen Kundenprotokoll aufgelistet sind;
Übertragen (280, 1150), durch das Zahlungsverarbeitungssystem (160), der zusätzlichen Bildvorlagen an die Händlerverkaufsstellenrechenvorrichtung (130) zur Anzeige zusammen mit den Bildvorlagen in dem aktuellen Kundenprotokoll; und
Empfangen (280, 1190, 290, 1310), durch das Zahlungsverarbeitungssystem (160), einer Angabe einer Auswahl einer bestimmten Bildvorlage aus den angezeigten Bildvorlagen.

5. Verfahren nach Anspruch 4, ferner umfassend:
Bestimmen, durch das Zahlungsverarbeitungssystem (160), dass die Benutzerrechenvorrichtung (110) die Netzwerkverbindung mit der Händler-Beacon-Vorrichtung (120) nicht länger aufrechterhält;
Entfernen, durch das Zahlungsverarbeitungssystem (160), der Gesichtsvorlage des Benutzers und des zugeordneten Händlersystemstandorts aus dem aktuellen Kundenprotokoll, um ein aktualisiertes aktuelles Kundenprotokoll zu erzeugen; und
Übertragen, durch das Zahlungsverarbeitungssystem (160) und an die Händlerverkaufsstellenrechenvorrichtung (130), des aktualisierten aktuellen Kundenprotokolls.

6. Verfahren nach Anspruch 5, wobei das Zahlungsverarbeitungssystem (160) bestimmt, dass die Benutzerrechenvorrichtung (130) die Netzwerkverbindung mit der Händler-Beacon-Vorrichtung (120) nicht länger aufrechterhält, wenn eine nachfolgende Übertragung der Benutzerkontokennung und der Händler-Beacon-Kennung nicht innerhalb einer Schwellenmenge an Zeit von der Benutzerrechenvorrichtung (110) empfangen wird.

7. Verfahren nach Anspruch 4, ferner umfassend:
Identifizieren, durch das Zahlungsverarbeitungssystem (160), eines Benutzerkontos basierend auf der empfangenen bestimmten Bildvorlage;
Bestimmen, durch das Zahlungsverarbeitungssystem (160), dass die empfangene bestimmte Bildvorlage mit der Bildvorlage übereinstimmt, die dem Benutzerkonto zugeordnet ist;
Übertragen (290, 1320), durch das Zahlungsverarbeitungssystem (160) und an die Händlerverkaufsstellenrechenvorrichtung (130), von Zahlungsinformationen, die ein oder mehrere Zahlungskontodaten umfassen, die dem Benutzerkonto zugeordnet sind;
Empfangen (290, 1350), durch das Zahlungsverarbeitungssystem (160) und von der Händlerverkaufsstellenrechenvorrichtung (130), einer Angabe einer Auswahl von bestimmten Zahlungskontodaten und Transaktionsdaten;
Erzeugen, durch das Zahlungsverarbeitungssystem (160), einer Transaktionsautorisierungsanforderung, die die Transaktionssumme, die Händlerkontokennung und die bestimmten Zahlungskontoinformationen umfasst;
Übertragen (290, 1360), durch das Zahlungsverarbeitungssystem (160), der Transaktionsautorisierungsanforderung an ein Ausstellersystem (150), das dem bestimmten Zahlungskonto zugeordnet ist;
Empfangen (290, 1370), durch das Zahlungsverarbeitungssystem (160) und von dem Ausstellersystem (150), von Daten, die eine Genehmigung der Transaktionsautorisierungsanforderung umfassen; und
Übertragen (290, 1380), durch das Zahlungsverarbeitungssystem (160) und an die Händlerverkaufsstellenrechenvorrichtung (130) zur Anzeige an der Verkaufsstellenvorrichtung, einer Quittung, die eine Zusammenfassung der Transaktion umfasst.

8. Verfahren nach Anspruch 4, ferner umfassend, zu einem Zeitpunkt vor dem Abrufen (280, 1140) der zusätzlichen Bildvorlagen basierend auf den aktuellen Kunden, die in dem aktuellen Kundenprotokoll aufgelistet sind, das Erzeugen (230), durch das Zahlungsverarbeitungssystem (160), der zusätzliche Bildvorlagen,
wobei, als eine Option, das Erzeugen (230) der zusätzlichen Bildvorlagen das Abrufen der zusätzlichen Bildvorlagen aus einer Bilddatenbank basierend auf einer Ähnlichkeit mit Bildvorlagen, die den aktuellen Kunden (101) zugeordnet sind, und das Speichern der abgerufenen zusätzlichen Bildvorlagen in einem Speicher des Zahlungsverarbeitungssystems (160) umfasst.

9. Computerprogrammprodukt, umfassend:
ein nichtflüchtiges computerlesbares Medium, das darauf verkörperte computerlesbare Programmanweisungen aufweist, die, wenn sie von einem Computer ausgeführt werden, den Computer veranlassen, das Verfahren nach einem der Ansprüche 1 bis 3 durchzuführen.

10. Computerprogrammprodukt nach Anspruch 9, wobei die Bildvorlagen Gesichtsbildvorlagen umfassen und wobei ein Bediener die bestimmte Bildvorlage als Reaktion auf das Vergleichen von jeder der angezeigten Bildvorlagen mit einem Gesichtsprofil des aktuellen Kunden (101) auswählt.

11. Computerprogrammprodukt, umfassend:
ein nichtflüchtiges computerlesbares Medium, das darauf verkörperte computerlesbare Programmanweisungen aufweist, die, wenn sie von einem Computer ausgeführt werden, den Computer veranlassen, das Verfahren nach einem der Ansprüche 4 bis 8 durchzuführen.

12. Rechenvorrichtung (130) zum Identifizieren von Benutzern, umfassend:
eine Speichervorrichtung (136); und
einen Prozessor, der kommunikativ an die Speichervorrichtung (136) gekoppelt ist, wobei der Prozessor Anwendungscodeanweisungen ausführt, die in der Speichervorrichtung gespeichert sind, um die Rechenvorrichtung zu Folgendem zu veranlassen:
Abrufen (260) von einer oder mehreren gespeicherten Bildvorlagen, die Kunden zugeordnet sind, die sich derzeit an oder nahe einem Händlersystemstandort befinden, wobei die eine oder die mehreren gespeicherten Bildvorlagen eine Bildvorlage beinhalten, die einem aktuellen Kunden (101) an einem physischen Standort für die Verkaufsstellenrechenvorrichtung (130) zugeordnet sind, wobei die eine oder die mehreren abgerufenen gespeicherten Bildvorlagen allen aktuellen Kunden mit einer zugeordneten Benutzerrechenvorrichtung entsprechen, die sich innerhalb einer Netzwerkentfernung von einer Händler-Beacon-Vorrichtung befindet und die eine Kontokennung eines Benutzers und eine Händler-Beacon-Kennung an ein Zahlungsverarbeitungssystem (160) überträgt;
Bestimmen (280, 1120), ob die eine oder die mehreren gespeicherten Bildvorlagen eine vordefinierte Schwellenanzahl an Vorlagen erfüllen;
wenn die eine oder die mehreren gespeicherten Bildvorlagen die vordefinierte Schwellenwertanzahl an Vorlagen nicht erfüllen, Anfordern (280, 1130), von einem Zahlungsverarbeitungssystem (160), von einer oder mehreren zusätzlichen Bildvorlagen ähnlich einem oder mehreren der abgerufenen gespeicherten Bildvorlagen;
Empfangen (280, 1150), von dem Zahlungsverarbeitungssystem (160), der angeforderten einen oder mehreren zusätzlichen Bildvorlagen, wobei die eine oder die mehreren zusätzlichen Bildvorlagen durch das Zahlungsverarbeitungssystem (160) und aus einem oder mehreren Bildern in einer Bilddatenbank ausgewählt werden, als ähnliche Bildvorlagen zu einer oder mehreren der abgerufenen gespeicherten Bildvorlagen basierend auf einem Vergleich von einem oder mehreren Merkmalen, die von einer oder mehreren der abgerufenen gespeicherten Bildvorlagen beschrieben werden, und entsprechenden Merkmalen des einen oder der mehreren Bilder in der Bilddatenbank;
Anzeigen (280, 1160), an einen Bediener (102) der Verkaufsstellenrechenvorrichtung (130), von einer oder mehreren der abgerufenen gespeicherten Bildvorlagen und einer oder mehreren der zusätzlichen Bildvorlagen;
Empfangen (280, 1190), von dem Bediener (102) der Verkaufsstellenrechenvorrichtung (130), einer Eingabe einer Auswahl einer bestimmten der angezeigten Bildvorlagen, wobei die Auswahl angibt, dass der Bediener (102) eine Übereinstimmung zwischen dem aktuellen Kunden (101) und der bestimmten einen der angezeigten Bildvorlagen bestimmt hat; und
Übertragen (280, 1190), an das Zahlungsverarbeitungssystem (160), einer Angabe der Auswahl der bestimmten einen der angezeigten Bildvorlagen.

13. System (160) zum Identifizieren von Benutzern, umfassend:
eine Speichervorrichtung (166); und
einen Prozessor, der kommunikativ an die Speichervorrichtung (166) gekoppelt ist, wobei der Prozessor Anwendungscodeanweisungen ausführt, die in der Speichervorrichtung gespeichert sind, um das System zu Folgendem zu veranlassen:
Empfangen (250, 750), von einer Benutzerrechenvorrichtung (110), einer Kontokennung eines Benutzers und einer Händler-Beacon-Kennung, wobei die Benutzerrechenvorrichtung (110) die Händler-Beacon-Kennung über eine Netzwerkverbindung mit einer Händler-Beacon-Vorrichtung (120) empfängt (730), die sich an einem physischen Standort eines Händlerrechensystems (120, 130) befindet;
Abrufen (260, 810) einer Bildvorlage, die dem Benutzer zugeordnet ist, basierend auf der Kontokennung des Benutzers;
Identifizieren (260, 820) einer Händlersystemverkaufsstellenrechenvorrichtung (130), die der Händler-Beacon-Kennung zugeordnet ist;
Hinzufügen (260, 850) der Bildvorlage des Benutzers zu einem aktuellen Kundenprotokoll, das Bildvorlagen von Benutzern umfasst, die sich derzeit an dem Standort des Händlerrechensystems (120, 130) befinden; und
Übertragen (260, 830), an die Händlerverkaufsstellenrechenvorrichtung (130), des aktuellen Kundenprotokolls;
wobei der Prozessor ferner Anwendungscodeanweisungen ausführt, die in der Speichervorrichtung gespeichert sind, um das System zu Folgendem zu veranlassen:
Empfangen (280, 1130), durch das Zahlungsverarbeitungssystem (160) und von der Händlerverkaufsstellenrechenvorrichtung (130), einer Anforderung von zusätzlichen Bildvorlagen, wobei die Händlerverkaufsstellenrechenvorrichtung (130) die Anforderung von zusätzlichen Bildvorlagen als Reaktion auf das Bestimmen (1120) überträgt, dass das aktuelle Kundenprotokoll eine Anzahl an Bildvorlagen umfasst, die kleiner als ein vordefinierter Schwellenwert ist;
Abrufen (280, 1140), durch das Zahlungsverarbeitungssystem (160), von zusätzlichen Bildvorlagen basierend auf den aktuellen Kunden, die in dem aktuellen Kundenprotokoll aufgelistet sind;
Übertragen (280, 1150), durch das Zahlungsverarbeitungssystem (160), der zusätzlichen Bildvorlagen an die Händlerverkaufsstellenrechenvorrichtung (130) zur Anzeige zusammen mit den Bildvorlagen in dem aktuellen Kundenprotokoll; und
Empfangen (280, 1190, 290, 1310), durch das Zahlungsverarbeitungssystem (160) einer Angabe einer Auswahl einer bestimmten Bildvorlage aus den angezeigten Bildvorlagen.

## Revendications

1. Procédé mis en œuvre par ordinateur (200) pour identifier des utilisateurs, comprenant :
la récupération (260), par un dispositif informatique de point de vente (130), d'un ou plusieurs modèles d'images stockés associés à des clients actuellement situés à ou à proximité d'un emplacement de système marchand, dans lequel l'un ou plusieurs modèles d'images stockés comprennent un modèle d'image associé à un client actuel (101) à un emplacement physique pour le dispositif informatique de point de vente (130), dans lequel l'un ou plusieurs modèles d'images stockés récupérés correspondent à tous les clients actuels avec un dispositif informatique utilisateur associé (110) situé à une distance réseau d'un dispositif de balise marchande (120) et qui transmet un identifiant de compte d'un utilisateur et un identifiant de balise marchande à un système de traitement de paiement (160) ;
la détermination (280, 1120), par le dispositif informatique de point de vente (130), si l'un ou plusieurs modèles d'images stockés respectent un nombre seuil prédéfini de modèles ;
si l'un ou plusieurs modèles d'images stockés ne respectent pas le nombre seuil prédéfini de modèles, la demande (280, 1130), par le dispositif informatique de point de vente (130) et auprès du système de traitement de paiement (160), d'un ou plusieurs modèles d'images supplémentaires similaires à l'un ou plusieurs des modèles d'images stockés récupérés ;
la réception (280, 1150), par le dispositif informatique de point de vente (130) et auprès du système de traitement de paiement (160), de l'un ou plusieurs modèles d'images supplémentaires demandés, l'un ou plusieurs modèles d'images supplémentaires sélectionnés, par le système de traitement de paiement (160) et parmi une ou plusieurs images dans une base de données d'images, en tant que modèles d'images similaires à un ou plusieurs des modèles d'images stockés récupérés sur la base d'une comparaison d'une ou plusieurs caractéristiques décrites par un ou plusieurs des modèles d'images stockés récupérés et de caractéristiques correspondantes de l'une ou plusieurs images dans la base de données d'images ;
l'affichage (280, 1160), par le dispositif informatique de point de vente (130) et à un opérateur (102) du dispositif informatique de point de vente (130), d'un ou plusieurs des modèles d'images stockés récupérés et d'un ou plusieurs des modèles d'images supplémentaires ;
la réception (280, 1190), par le dispositif informatique de point de vente (130) et de l'opérateur (102) du dispositif informatique de point de vente (130), d'une entrée de sélection de l'un particulier des modèles d'images affichés, la sélection indiquant que l'opérateur (102) a déterminé une correspondance entre le client actuel (101) et celui particulier des modèles d'images affichés ; et
la transmission (280, 1190), par le dispositif informatique de point de vente (130) et au système de traitement de paiement (160), d'une indication de la sélection de celui particulier des modèles d'images affichés.

2. Procédé selon la revendication 1, comprenant en outre :
la réception (290, 1310), par le dispositif informatique de point de vente (130) et en provenance du système de traitement de paiement (160), d'informations de compte de paiement comprenant une ou plusieurs options de paiement associées à un compte de portefeuille numérique du client actuel (101) associé à celui particulier sélectionné des modèles d'images ;
l'affichage (290, 1320), par le dispositif informatique de point de vente (130), des informations de compte de paiement ;
la réception (290, 1330), par le dispositif informatique de point de vente (130), d'une entrée de sélection d'une option de paiement particulière ; et
la transmission (290, 1340), par le dispositif informatique de point de vente (130) au système de traitement de paiement (160), d'une indication de sélection d'une option de paiement particulière par l'opérateur, dans lequel le système de traitement de paiement (160) traite une transaction en utilisant des informations de compte de paiement associées à l'option de paiement particulière sélectionnée.

3. Procédé selon la revendication 1, dans lequel (i) l'un ou plusieurs modèles supplémentaires sont générés par le système de traitement de paiement (160) sur la base de l'un ou plusieurs modèles stockés, et/ou
dans lequel (ii) les modèles d'images comprennent des modèles d'images faciales, et dans lequel l'entrée de la sélection comprend une sélection par l'opérateur du dispositif informatique de point de vente du modèle d'image particulier en réponse à la comparaison de chacun des modèles d'images affichés à un profil facial du client actuel, et/ou
dans lequel (iii) les modèles d'images comprennent des modèles d'images de signature, et dans lequel l'entrée de la sélection comprend une sélection par l'opérateur du dispositif informatique de point de vente du modèle d'image particulier sur la base d'une comparaison d'une signature fournie par le client à chacun des modèles d'images affichés.

4. Procédé mis en œuvre par ordinateur pour identifier des utilisateurs, comprenant :
la réception (250, 750), par un système de traitement de paiement (160) et en provenance d'un dispositif informatique d'utilisateur (110), d'un identifiant de compte d'un utilisateur et d'un identifiant de balise marchande, dans lequel le dispositif informatique d'utilisateur (110) reçoit (730) l'identifiant de balise marchande via une connexion réseau avec un dispositif de balise marchande (120) situé à un emplacement physique d'un système informatique marchand (120, 130) ;
la récupération (260, 810), par le système de traitement de paiement (160), d'un modèle d'image associé à l'utilisateur sur la base de l'identifiant de compte de l'utilisateur ;
l'identification (260, 820), par le système de traitement de paiement (160), d'un dispositif informatique de point de vente de système marchand (130) associé à l'identifiant de balise marchande ;
l'ajout (260, 850), par le système de traitement de paiement (160), du modèle d'image de l'utilisateur à un journal de clients actuels comprenant des modèles d'images d'utilisateurs actuellement à l'emplacement du système informatique marchand (120, 130) ;
la transmission (260, 830), par le système de traitement de paiement et au dispositif informatique de point de vente marchand, du journal de clients actuels ;
dans lequel ledit procédé comprend en outre :
la réception (280, 1130), par le système de traitement de paiement (160) et en provenance du dispositif informatique de point de vente marchand (130), d'une demande de modèles d'images supplémentaires, dans lequel le dispositif informatique de point de vente marchand (130) transmet la demande de modèles d'images supplémentaires en réponse à la détermination (1120) que le journal de clients actuels comprend un nombre de modèles d'images inférieur à un seuil prédéfini ;
la récupération (280, 1140), par le système de traitement de paiement (160), de modèles d'images supplémentaires sur la base des clients actuels répertoriés dans le journal de clients actuels ;
la transmission (280, 1150), par le système de traitement de paiement (160), des modèles d'images supplémentaires au dispositif informatique de point de vente marchand (130) pour affichage avec les modèles d'images dans le journal de clients actuels ; et
la réception (280, 1190, 290, 1310), par le système de traitement de paiement (160), d'une indication d'une sélection d'un modèle d'image particulier parmi les modèles d'images affichés.

5. Procédé selon la revendication 4, comprenant en outre :
la détermination, par le système de traitement de paiement (160), que le dispositif informatique utilisateur (110) ne maintient plus de connexion réseau avec le dispositif de balise marchande (120) ;
la suppression, par le système de traitement de paiement (160), du modèle facial de l'utilisateur et de l'emplacement du système marchand associé du journal de clients actuels pour générer un journal de clients actuels mis à jour ; et
la transmission, par le système de traitement de paiement (160) et au dispositif informatique de point de vente marchand (130), du journal de clients actuels mis à jour.

6. Procédé selon la revendication 5, dans lequel le système de traitement de paiement (160) détermine que le dispositif informatique utilisateur (130) ne maintient plus la connexion réseau avec le dispositif de balise marchande (120) si une transmission ultérieure de l'identifiant de compte utilisateur et de l'identifiant de balise marchande n'est pas reçue dans un laps de temps seuil en provenance du dispositif informatique utilisateur (110).

7. Procédé selon la revendication 4, comprenant en outre :
l'identification, par le système de traitement de paiement (160), d'un compte utilisateur sur la base du modèle d'image particulier reçu ;
la détermination, par le système de traitement de paiement (160), que le modèle d'image particulier reçu correspond au modèle d'image associé au compte utilisateur ;
la transmission (290, 1320), par le système de traitement de paiement (160) et au dispositif informatique de point de vente marchand (130), des informations de paiement comprenant une ou plusieurs données de compte de paiement associées au compte utilisateur ;
la réception (290, 1350), par le système de traitement de paiement (160) et en provenance du dispositif informatique de point de vente marchand (130), d'une indication de sélection de données de compte de paiement et de données de transaction particulières ;
la génération, par le système de traitement de paiement (160), d'une demande d'autorisation de transaction comprenant le total de la transaction, l'identifiant de compte marchand et les informations de compte de paiement particulières ;
la transmission (290, 1360), par le système de traitement de paiement (160), de la demande d'autorisation de transaction à un système émetteur (150) associé au compte de paiement particulier ;
la réception (290, 1370), par le système de traitement de paiement (160) et en provenance du système émetteur (150), de données comprenant une approbation de la demande d'autorisation de transaction ; et
la transmission (290, 1380), par le système de traitement de paiement (160) et au dispositif informatique de point de vente marchand (130) pour affichage sur le dispositif de point de vente, d'un reçu comprenant un récapitulatif de la transaction.

8. Procédé selon la revendication 4, comprenant en outre, à un moment avant la récupération (280, 1140) des modèles d'images supplémentaires sur la base des clients actuels répertoriés dans le journal de clients actuels, la génération (230), par le système de traitement de paiement (160), des modèles d'images supplémentaires,
dans lequel, en option, la génération (230) des modèles d'images supplémentaires comprend la récupération des modèles d'images supplémentaires à partir d'une base de données d'images sur la base d'une similitude avec des modèles d'images associés aux clients actuels (101) et le stockage des modèles d'images supplémentaires récupérés dans une mémoire du système de traitement de paiement (160).

9. Produit de programme informatique, comprenant :
un support lisible par ordinateur non transitoire comportant des instructions de programme lisibles par ordinateur mises en œuvre dans celui-ci qui, lorsqu'elles sont exécutées par un ordinateur, amènent l'ordinateur à exécuter le procédé selon l'une quelconque des revendications 1 à 3.

10. Produit de programme informatique selon la revendication 9, dans lequel les modèles d'images comprennent des modèles d'images faciales et dans lequel un opérateur sélectionne le modèle d'image particulier en réponse à la comparaison de chacun des modèles d'images affichés à un profil facial du client actuel (101).

11. Produit de programme informatique, comprenant :
un support lisible par ordinateur non transitoire comportant des instructions de programme lisibles par ordinateur mises en œuvre dans celui-ci qui, lorsqu'elles sont exécutées par un ordinateur, amènent l'ordinateur à exécuter le procédé selon l'une quelconque des revendications 4 à 8.

12. Dispositif informatique (130) pour identifier des utilisateurs, comprenant :
un dispositif de stockage (136) ; et
un processeur couplé en communication au dispositif de stockage (136), dans lequel le processeur exécute des instructions de code d'application qui sont stockées dans le dispositif de stockage pour amener le dispositif informatique à :
récupérer (260) un ou plusieurs modèles d'images stockés associés à des clients actuellement situés à ou à proximité d'un emplacement de système marchand, dans lequel l'un ou plusieurs modèles d'images stockés comprennent un modèle d'image associé à un client actuel (101) à un emplacement physique pour le dispositif informatique de point de vente (130), dans lequel l'un ou plusieurs modèles d'images stockés récupérés correspondant à tous les clients actuels avec un dispositif informatique utilisateur associé situé à une distance réseau d'un dispositif de balise marchande et qui transmet un identifiant de compte d'un utilisateur et un identifiant de balise marchande à un système de traitement de paiement (160) ;
déterminer (280, 1120) si l'un ou plusieurs modèles d'images stockés respectent un nombre seuil prédéfini de modèles ;
si l'un ou plusieurs modèles d'images stockés ne respectent pas le nombre seuil prédéfini de modèles, demander (280, 1130), auprès d'un système de traitement de paiement (160), un ou plusieurs modèles d'images supplémentaires similaires à un ou plusieurs des modèles d'images stockés récupérés ;
recevoir (280, 1150), du système de traitement de paiement (160), l'un ou plusieurs modèles d'images supplémentaires demandés, l'un ou plusieurs modèles d'images supplémentaires sélectionnés, par le système de traitement de paiement (160) et parmi une ou plusieurs images dans une base de données d'images, en tant que modèles d'images similaires à un ou plusieurs des modèles d'images stockés récupérés sur la base d'une comparaison d'une ou plusieurs caractéristiques décrites par un ou plusieurs des modèles d'images stockés récupérés et des caractéristiques correspondantes de l'une ou plusieurs images dans la base de données d'images ;
afficher (280, 1160), à un opérateur (102) du dispositif informatique de point de vente (130), un ou plusieurs des modèles d'images stockés récupérés et un ou plusieurs des modèles d'images supplémentaires ;
recevoir (280, 1190), de l'opérateur (102) du dispositif informatique de point de vente (130), une entrée de sélection de l'un particulier des modèles d'images affichés, la sélection indiquant que l'opérateur (102) a déterminé une correspondance entre le client actuel (101) et l'un particulier des modèles d'images affichés ; et
transmettre (280, 1190) au système de traitement de paiement (160) une indication de la sélection de l'un particulier des modèles d'images affichés.

13. Système (160) pour identifier des utilisateurs, comprenant :
un dispositif de stockage (166) ; et
un processeur couplé en communication au dispositif de stockage (166), dans lequel le processeur exécute des instructions de code d'application qui sont stockées dans le dispositif de stockage pour amener le système à :
recevoir (250, 750), d'un dispositif informatique utilisateur (110), un identifiant de compte d'un utilisateur et un identifiant de balise marchande, dans lequel le dispositif informatique utilisateur (110) reçoit (730) l'identifiant de balise marchande via une connexion réseau avec un dispositif de balise marchande (120) situé à un emplacement physique d'un système informatique marchand (120, 130) ;
récupérer (260, 810) un modèle d'image associé à l'utilisateur sur la base de l'identifiant de compte de l'utilisateur ;
identifier (260, 820) un dispositif informatique de point de vente de système marchand (130) associé à l'identifiant de balise marchande ;
ajouter (260, 850) le modèle d'image de l'utilisateur à un journal de clients actuels comprenant des modèles d'images d'utilisateurs actuellement à l'emplacement du système informatique marchand (120, 130) ; et
transmettre (260, 830) au dispositif informatique de point de vente marchand (130) le journal de clients actuels ;
dans lequel le processeur exécute en outre des instructions de code d'application qui sont stockées dans le dispositif de stockage pour amener le système à :
recevoir (280, 1130), par le système de traitement de paiement (160) et du dispositif informatique de point de vente marchand (130), une demande de modèles d'images supplémentaires, dans lequel le dispositif informatique de point de vente marchand (130) transmet la demande de modèles d'images supplémentaires en réponse à la détermination (1120) que le journal de clients actuels comprend un nombre de modèles d'images inférieur à un seuil prédéfini ;
récupérer (280, 1140), par le système de traitement de paiement (160), des modèles d'images supplémentaires sur la base des clients actuels répertoriés dans le journal de clients actuels ;
transmettre (280, 1150), par le système de traitement de paiement (160), les modèles d'images supplémentaires au dispositif informatique de point de vente marchand (130) pour affichage avec les modèles d'images dans le journal de clients actuels ; et
recevoir (280, 1190, 290, 1310), par le système de traitement de paiement (160), une indication de sélection d'un modèle d'image particulier parmi les modèles d'images affichés.
